# EUROPÄISCHE PATENTSCHRIFT

(11) **EP 1 472 032 B1**
(45) Veröffentlichungstag und Bekanntmachung des Hinweises auf die Patenterteilung: **02.11.2006**
(21) Anmeldenummer: 03734593.1
(22) Anmeldetag: 23.01.2003
(51) Int. Cl.: B23C 3/18

(54) **VERFAHREN ZUR RUNDUM-BEARBEITUNG EINES ROHLINGS**
METHOD FOR THE ALL-AROUND MACHINING OF A BLANK
PROCEDE D'USINAGE CIRCULAIRE D'UNE EBAUCHE

(30) Priorität: 31.01.2002 CH 168022002
(43) Veröffentlichungstag der Anmeldung: 03.11.2004
(73) Patentinhaber: Alstom Technology Ltd, 5400 Baden (CH)
(72) Erfinder: KILLER, Franz, CH-5272 Gansingen (CH); SCHERER, Josef, 60529 Frankfurt (DE)
(86) Internationale Anmeldenummer: PCT/CH2003/000052
(87) Internationale Veröffentlichungsnummer: WO 2003/064088

(56) Entgegenhaltungen:
- EP-A- 0 659 520
- EP-A- 0 827 807
- CH-A- 686 878
- PATENT ABSTRACTS OF JAPAN vol. 012, no. 478 (M-775), 14. Dezember 1988 (1988-12-14) & JP 63 200937 A (KAWASAKI HEAVY IND LTD), 19. August 1988 (1988-08-19)

## Beschreibung

### TECHNISCHES GEBIET

Die vorliegende Erfindung betrifft Verfahren zur Rundum-Bearbeitung von Rohlingen oder vorbearbeiteten Werkstücken mit wenigstens einer Bearbeitungsmaschine wie beispielsweise einer Fräsmaschine zu auslieferfertigen, in ihrer dreidimensionalen Form abschließend bearbeiteten Bauteilen.

### STAND DER TECHNIK

Ein Verfahren gemäß Oberbegriff des Anspruchs 1 ist aus der EP-A-0 827 807 bekannt. Im Bereich der Herstellung von Turbinenschaufeln wird üblicherweise mit einer Mehrspindelbearbeitung gearbeitet. Dies bedeutet, dass ein Rohling zunächst einer groben Vorbearbeitung unterzogen wird, anschließend der Blattbereich im Detail ausgearbeitet wird, dann der Kopf und zuletzt der Fuß gefertigt wird. Zwischen diesen einzelnen Bearbeitungsschritten muss das Werkstück jeweils von Hand oder durch einen Roboter umgespannt werden, dies weil sowohl häufig die Fräsmaschinen nur in der Lage sind einzelne Bearbeitungsschritte durchzuführen, und insbesondere weil jede Fassung respektive Halterung des Werkstückes immer nur die Bearbeitung eines bestimmten Bereichs erlaubt. Diese Art der Fertigung wird üblicherweise als sogenannte " Kistenfertigung " bezeichnet, da üblicherweise jeweils eine Maschine für einen bestimmten Bearbeitungsschritt verantwortlich zeichnet, und weil nach jedem Bearbeitungsschritt das Werkstück in einer Kiste zwischengelagert wird.
Problematisch an einer derartigen Fertigung ist unter anderem die Tatsache, dass die Geschwindigkeit einer solchen Fertigungsstraße stets von der Geschwindigkeit des langsamsten Bearbeitungsschrittes bestimmt wird. Außerdem erfordert die Vielzahl von Transferprozessen von Werkstücken zwischen den einzelnen Einheiten wie Fräsmaschinen, Messstation, Waschstationen etc. aufwändige Einrichtungen und führt zu erheblichen Zeitverlusten im Herstellungsprozess.

### DARSTELLUNG DER ERFINDUNG

Es ist daher Aufgabe der vorliegenden Erfindung, ein Verfahren zur Rundum-Bearbeitung eines Rohlings mit wenigstens einer Bearbeitungsmaschine resp. z.B. einer Fräsmaschine zur Verfügung zu stellen, welches die Fertigung des einsatzfertigen Bauteils in möglichst wenigen Bearbeitungsschritten und Aufspannungen sowie unter Verwendung von möglichst gleichartig ausgebildeten Bearbeitungsmaschinen wie beispielsweise sogenannten Fräsmaschinen (Bearbeitungszellen) ermöglicht. Die Bearbeitungsmaschine ist dabei in der Lage, unterschiedliche Operationen wie Fräsen, Bohren, Drehen und/oder Erodieren etc. durchzuführen. Der Begriff einer Fräsmaschine ist in diesem Zusammenhang somit weit auszulegen, d.h. bezieht sich auf Bearbeitungsmaschinen, welche nicht nur zu fräsen in der Lage sind, sondern ggf. auch drehen, bohren, erodieren, schleifen, härten etc. können.
Die vorliegende Erfindung löst diese Aufgabe, indem der Rohling in zwei Bearbeitungsschritten in seine fertige Form gebracht wird. Dies indem in einem ersten Bearbeitungsschritt von wenigstens einem ersten Adapter gehalten wird und von einer Bearbeitungsmaschine resp. Fräsmaschine ein erster Bereich in seine endgültige, der bestimmungsgemäßen Verwendung entsprechende Teilform gebracht wird, und indem in einem zweiten Bearbeitungsschritt der teilbearbeitete Rohling von wenigstens einem zweiten Adapter im ersten, endgültig bearbeiteten Bereich gehalten wird und der übrige Bereich von einer Bearbeitungsmaschine resp. Fräsmaschine in seine endgültige, der bestimmungsgemäßen Verwendung entsprechende Gesamtform gebracht wird.
Gegenstand der Erfindung ist folglich ein Verfahren gemäß dem Hauptanspruch.

Der Kern der Erfindung besteht darin, den Rohling im ersten Schritt derart zur Bearbeitung zu Haltern, respektive im Bearbeitungsraum einer Bearbeitungsmaschine resp. Fräsmaschine mit Hilfe eines Adapters derart zu befestigen, dass jener Bereich des Werkstückes, welcher nicht infolge der Befestigung durch den Adapter verdeckt respektive der Bearbeitung durch die Bearbeitungsmaschine resp. Fräsmaschine unzugänglich ist im ersten Bearbeitungsschritt bereits in seine endgültige, der bestimmungsgemäßen Verwendung entsprechende dreidimensionalen Form bearbeitet wird. Dies ermöglicht in der Folge, dass das Werkstück mit Hilfe eines weiteren Adapters, welcher das Werkstück an bestimmten, bereits endgültig bearbeiteten Zonen greift, zur Weiterbearbeitung befestigt werden kann. Die Befestigung muss dabei selbstverständlich derart geschehen, dass der gesamte noch unbearbeitete Bereich des teilbearbeiteten Rohlings der endgültigen Weiterbearbeitung durch die gleiche oder eine andere Bearbeitungsmaschine resp. Fräsmaschine uneingeschränkt zugänglich ist. So ist es dann möglich, dass im zweiten Bearbeitungsschritt ohne ein weiteres Umspannen der teilbearbeitete Rohling endgültig in seine gesamten dreidimensionale Form gebracht werden kann.
Dies ist durchaus überraschend, denn die einzelnen Bearbeitungsschritte umfassen Fräsoperationen wie unter anderem auch Schruppen und Schlichten, welche erhebliche Kräfte auf das Werkstück ausüben und welche den Fachmann bisher immer davon abgehalten haben, das Werkstück in nur zwei Aufspannungen in seine endgültige Form zu bringen. Üblicherweise wurde immer davon ausgegangen, dass die bei der Bearbeitung entstehenden Kräfte entweder zu einer Schädigung des Werkstückes oder zu einer ungenügenden Qualität des endgültigen Werkstücks führen (z. B. infolge von Vibrationen, Momenten etc.). Es zeigt sich nun aber, dass es möglich ist, in einem ersten Bearbeitungsschritt bereits Funktionsflächen in ihre endgültige Form zu bringen, und nun eben diese Funktionsflächen sofort zur Halterung für den zweiten Bearbeitungsschritt zu verwenden.

Die Einsparung von Aufspannungen führt zu einer erheblichen Vereinfachung des Herstellungsprozesses, zur Einsparung von Kosten (weniger Standzeiten, weniger Mittel zum Transfer von Bauteilen, etc.) und erlaubt trotzdem die Herstellung von endgültigen Formen, welche höchsten Qualitätsansprüchen gerecht wird.
Bei der bestimmungsgemässen Gesamtform, welche mit dem vorgeschlagenen Verfahren erzielt werden kann, handelt es sich um ein beliebiges Bauteil, welches aus einem Rohling durch die genannten Operationen erhalten werden kann. Besonders geeignet ist das Verfahren für die Herstellung von Bauteilen, wie sie in einer Turbine (Dampfturbine oder Gasturbine) Verwendung finden. So handelt es sich bevorzugt beim Bauteil um eine Lauf- oder Leitschaufel einer Turbine.
Gemäss einer ersten bevorzugten Ausführungsform der Erfindung handelt es sich beim Rohling um einen Rohling aus Metall oder einem Keramikwerkstoff in Form eines zylindrischen oder polyeder-förmigen, insbesondere bevorzugt quaderförmigen Blockes oder um einen Gussrohling oder Schmiederohling handelt. Ebenfalls möglich ist es, den Rohling in einer bereits vorbearbeiteten Form dem erfindungsgemässen Verfahren zuzuführen. Überraschenderweise gelingt das erfindungsgemässe Verfahren auch bei derart schwierig zu bearbeitenden Werkstoffen, und dies ohne Einbuße der Qualität der endgültigen Formteile.
Gemäß einer weiteren bevorzugten Ausführungsform der Erfindung wird der teilbearbeitete Rohling nach dem ersten Bearbeitungsschritt gereinigt und/oder vermessen , wobei er dazu insbesondere bevorzugt in einer definierten Halterung aus dem Bearbeitungsbereich der Bearbeitungsmaschine resp. Fräsmaschine entfernt, gereinigt, und/oder in einer Messstation vermessen wird. Dieser Schritt zwischen den zwei eigentlichen Bearbeitungsschritten erlaubt einerseits eine abschließende Qualitätskontrolle des bereits bearbeiteten Bereichs des Werkstückes, dies in ganz besonders einfacher Weise, wenn das teilbearbeitete Werkstück in definierter Weise aus dem Bearbeitungsraum der Bearbeitungsmaschine resp. Fräsmaschine entnommen wird. Definierte Weise heißt in diesem Zusammenhang, dass die Mittel zur Entnahme des teilbearbeiteten Werkstückes dieses an einer wohldefinierten Stelle greifen, sodass das teilbearbeitete Werkstück anschließend in ebenso wohldefinierter Position in einer Messstation fixiert und vermessen werden kann. Dies ist insbesondere dann sehr gut möglich, wenn zur definierten Halterung beim ersten Bearbeitungsschritt in den übrigen Bereichen, d. h. in jenen Bereichen, welche im ersten Bearbeitungsschritt noch nicht zu einer eigentlichen Funktionsfläche bearbeitet worden sind, definierte (temporäre) Spannflächen ausgearbeitet werden, über welche Transportmittel, insbesondere in Form von Greifern, und/oder Halterungsmitteln der Messstation respektive einer Reinigungseinheit, insbesondere in Form von Greifern, den teilbearbeiteten Rohling in einer definierten Positionierung haltern können.
Eine weitere bevorzugte Ausführungsform der Erfindung zeichnet sich dadurch aus, dass es sich bei der endgültigen Gesamtform um eine Turbinenschaufel mit oder ohne Deckband handelt, insbesondere eine Turbinenschaufel mit einer Oberfläche im Bereich von N4 bis N5 bei Toleranzen von + - 0,002 mm, einer Länge von im Bereich von 10 bis 400 mm oder sogar bis 2400 mm bei einem rotierenden Durchmesser von 50 bis 400 mm und einem Gewicht von 0,01 bis 40 kg oder sogar bis 240 kg. Das Verfahren lässt sich überraschenderweise mit anderen Worten selbst bei derart komplexen und insbesondere in Bezug auf die Qualitätsanforderungen sehr anspruchsvollen Formen anwenden, und dies außerdem in einem sehr großen Größenbereich (insbesondere in Bezug auf Länge), Gewichtsbereich, sowie für sehr kleine Toleranzen.
Bei einer anderen bevorzugten Ausführungsform wird nach den zwei Bearbeitungsschritten die endgültige Gesamtform gereinigt und/oder vermessen und/oder verpackt wird, wodurch das Bauteil dann indirekt einer Lagerung oder Versendung oder einem Einbauprozess zugeführt werden kann.
Eine besondere Ausführungsform des erfindungsgemässen Verfahrens arbeitet damit, dass der Rohling zunächst auf seiner einen Seite im ersten Bearbeitungsschritt und anschließend auf seiner anderen Seite im zweiten Bearbeitungsschritt ausgeformt wird. Das heißt der erste Adapter greift den Rohling an einem ersten Ende greift, im ersten Bearbeitungsschritt wird das zweite Ende des Rohlings in seine endgültige, der bestimmungsgemäßen Verwendung entsprechende Teilform gebracht, der zweite Adapter greift anschließend den teilbearbeiteten Rohling an der Teilform und im zweiten Bearbeitungsschritt wird das erste Ende zur endgültigen Gesamtform verarbeitet. Handelt es sich bei der endgültigen Gesamtform um eine Turbinenschaufel, so wird vorzugsweise im ersten Bearbeitungsschritt der Fußbereich ausgearbeitet, anschließend dieser Fußbereich zur Halterung für den zweiten Bearbeitungsschritt verwendet, und im zweiten Bearbeitungsschritt der Kopfbereich ausgearbeitet. Auch das umgekehrte Verfahren ist insbesondere bei einer Turbinenschaufel mit Deckblatt realisierbar, das heißt das im ersten Schritt der Kopfbereich mit Deckblatt ausgearbeitet wird. Außerdem erweist es sich als vorteilhaft, in diesem Fall im ersten Bearbeitungsschritt auf zwei gegenüberliegenden Seiten des Rohlings jeweils zwei definierte Spannflächen in Form von Sacklöchern oder Aussparungen (selbstverständlich derart, dass die anschließend im zweiten Bearbeitungsschritt anzubringenden Funktion Flächen von diesen Aussparungen nicht beeinflusst werden) gefräst werden, wobei ein erstes (oberes) Paar für das Greifen mit einem Greifer zum Entfernen und Wiedereinbringen des teilbearbeiteten Rohlings aus dem Bearbeitungsbereich der Bearbeitungsmaschine resp. Fräsmaschine verwendet wird, und ein zweites (unteres) Paar für das definierte Fixieren des teilbearbeiteten Rohlings auf der Messstation verwendet wird. Ggf. kann dabei vorteilhafterweise beim zweiten Bearbeitungsschritt ein Zentrierloch auf der dem Fuß abgewandten Seite gefräst werden, und wenigstens während einiger Materialbearbeitungsschritte während des zweiten Bearbeitungsschrittes in dieses Zentrierloch ein verfahr- und/oder klappbarer Reitstock zur Halterung eingefahren werden. So kann sichergestellt werden, dass die bei derart Bearbeitung auftretenden Momente reduziert respektive mögliche Vibrationen verhindert werden können.
Eine andere besondere Ausführungsform des Verfahrens arbeitet andererseits damit, dass der Rohling während des ersten Bearbeitungsschrittes auf einer Seite oder ggf. an seinen beiden Enden (über einen Reitstock) gefasst wird, der gesamte mittlere Bereich des Werkstückes ausgearbeitet wird bis auf jeweilige Überstände, welche ggf. bereits mit Einschnitten versehen sind, welche die terminalen Bereiche bereits definieren. Anschließend wird dieses Bauteil dem zweiten Bearbeitungsschritt zugeführt und während diesem zweiten Schritt in diesem mittleren Bereich, bei welchem die endgültigen Funktionsflächen bereits ausgearbeitet sind, über einen Adapter gehalten. Mit anderen Worten wird so vorgegangen, dass der erste Adapter den Rohling an einem ersten Ende greift und ggf. das zweite Ende über einen verfahr- und/oder klappbaren Reitstock und eine Zentrierbohrung fixiert wird, dass im ersten Bearbeitungsschritt der mittlere Bereich und ggf. einer der Endbereiche des Rohlings in seine endgültige, der bestimmungsgemäßen Verwendung entsprechende Teilform gebracht wird, dass der zweite Adapter den teilbearbeiteten Rohling an der mittleren Teilform greift und der eine respektive ggf. die beiden Endbereiche zur endgültigen Gesamtform verarbeitet werden. Beispielsweise kann es sich bei der Teilform um eine Turbinenschaufel unter Belassung von unbearbeiteten Überständen am Kopf- und/oder am Fußteil handeln, wobei insbesondere bevorzugt bereits beim ersten Bearbeitungsschritt Einschnitte zwischen den Überständen und der Turbinenschaufel vorgesehen werden. In diesem Fall greift vorteilhafterweise der zweite Adapter die teilbearbeitete Turbinenschaufel mit zwei Spannbacken, wobei die Achse der teilbearbeiteten Turbinenschaufel im wesentlichen senkrecht zur Befestigungsachse des zweiten Adapters in der Bearbeitungsmaschine resp. Fräsmaschine zu liegen kommt.
Gemäß einer zusätzlichen bevorzugten Ausführungsform wird das Verfahren in einer Bearbeitungszelle oder Bearbeitungseinheit durchgeführt, welche über mehrere, z. B. 2, 4, oder sogar 6 Bearbeitungsmaschinen resp. Fräsmaschinen oder mehr verfügt. Das heißt, dass wenigstens zwei Bearbeitungsmaschinen resp. Fräsmaschinen in einer Zelle gleichzeitig zur Anwendung kommen, wobei die Rohlinge, die teilbearbeiteten Rohlinge sowie die endgültigen Gesamtformen mit einem Handlingsystem über ein Handlingportal über eine zentrale Steuerung jeweils verfügbaren Bearbeitungsmaschinen resp. Fräsmaschinen zugeführt und in diesen einem ersten respektive zweiten Bearbeitungsschritt unterzogen werden. Das Handlingportal bedient mit anderen Worten die wenigstens zwei Bearbeitungsmaschinen resp. Fräsmaschinen, wobei dies in optimierter Weise geschehen kann, und so eben die eingangs genannte Problematik, welche bei einer Anordnung auftritt, bei welcher einer jeweiligen Bearbeitungsmaschine resp. Fräsmaschine eine bestimmte Funktion zugeordnet wird, vermieden werden kann. Sind nämlich beide Bearbeitungsmaschinen resp. Fräsmaschinen in der Lage, sowohl den ersten wie auch den zweiten Bearbeitungsschritt durchzuführen, so können über die zentrale Steuerung die zur Verfügung stehenden Bearbeitungsmittel immer optimal eingesetzt werden. Die Zelle kann dabei noch weitere Einheiten umfassen, so z. B. gleichzeitig wenigstens eine Messeeinheit und/oder wenigstens eine Reinigungseinheit und/oder wenigstens einen Werkstück-Pufferplatz und/oder ein Beladeband (auch ein Paternoster ist möglich) und/oder ein Adaptermagazin und/oder eine Ausschleusstation und/oder eine Wasch- und Konservierungsanlage und/oder eine Materialcodelesestation und/oder eine Beschriftungseinheit. Alle diese Komponenten sind dabei am Handlingportal angeschlossen, und die zentrale Steuerung weist die Teile auch diesen Einheiten den jeweiligen Bedingungen angepasst zu. Ggf. können auch mehrere Handlingportale angeordnet werden, auf jeden Fall aber mehrere Handlingsysteme.
Weitere bevorzugte Ausführungsformen des erfindungsgemässen Verfahrens sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Figuren näher erläutert werden. Es zeigen
- Fig. 1: ein Zellen-Layout mit zwei Fräsmaschinen ;
- Fig. 2: ein Zellen-Layout mit vier Fräsmaschinen ;
- Fig. 3: ein Zellen-Layout mit sechs Fräsmaschinen ;
- Fig. 4: einzelne Bearbeitungsschritte eines Rohlings gemäß dem ersten Ausführungsbeispiel:
a) einen typischen zu bearbeitenden Rohling ;
b) einen Spannadapter mit Rohling von vorn ;
c) einen Spannadapter mit Rohling von der Seite ;
d) einen Spannadapter mit einseitig bearbeitetem Rohling von vorn ;
e) einen Spannadapter mit einseitig bearbeitetem Rohling von der Seite ;
f) einen Spannadapter mit einseitig bearbeitetem Rohling von vorn mit eingreifendem Greifer ;
g) einen Spannadapter mit einseitig bearbeitetem Rohling von der Seite mit eingreifendem Greifer;
h) Ablösevorgang aus Spannadapter mit Greifer;
i) Ablagevorgang des einseitig bearbeiteten Rohlings auf der Messstation von vorn;
k) Ablagevorgang des einseitig bearbeiteten Rohlings auf der Messstation von der Seite ;
l) Vermessungsvorgang auf der Messstation von vorn ;
m) Vermessungsvorgang auf der Messstation von der Seite ;
n) Einführen des einseitig bearbeiteten Rohlings in den Sonderspannadapter durch den Greifer ;
o) Fixierung des einseitig bearbeiteten Rohlings in der Schaufelfräsmaschine ;
p) fertig bearbeitete Schaufel in der Schaufelfräsmaschine ; und

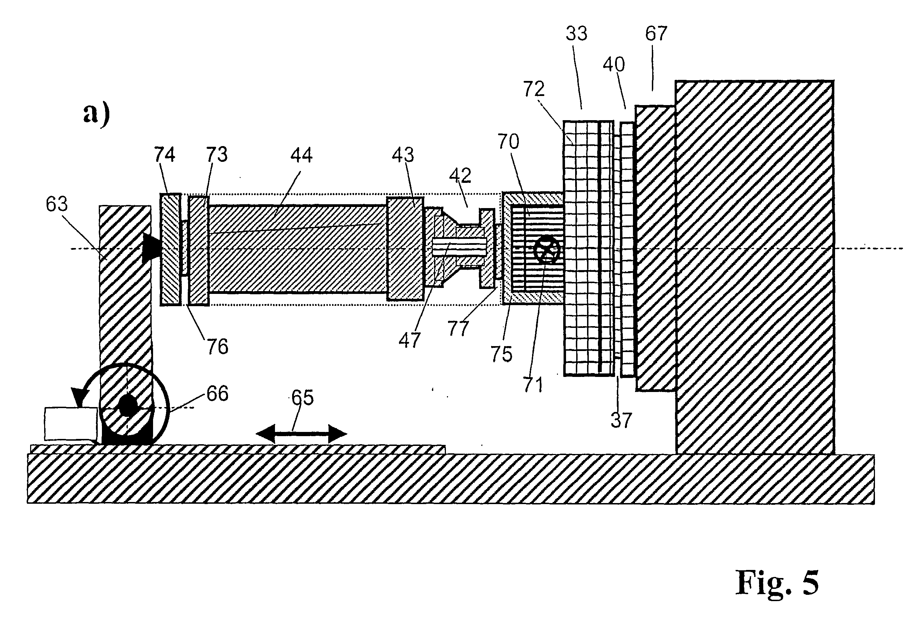

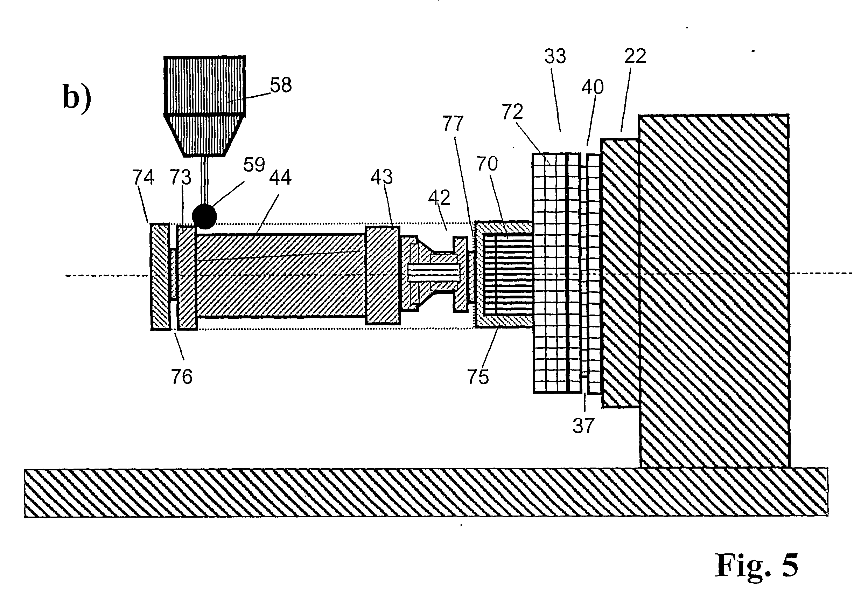

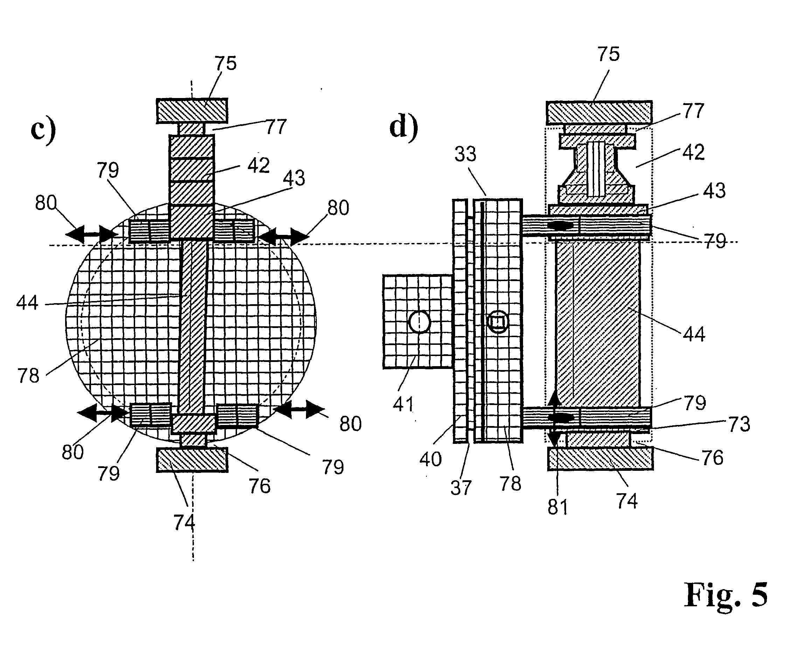

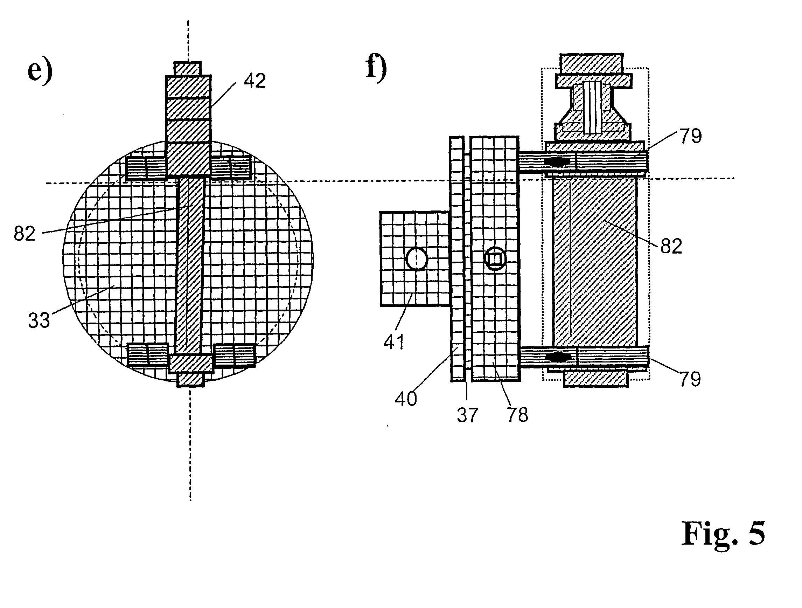

- Fig. 5: einzelne Bearbeitungsschritte eines Rohlings gemäß dem zweiten Ausführungsbeispiel:
a) mittig bearbeiteter Rohling in der Schaufelfräsmaschine ;
b) Vermessung des mittig bearbeiteten Rohlings in der Messstation ;
c) Sonderspannadapter mit eingespanntem mittig bearbeitetem Rohling von vorn ;
d) Sonderspannadapter mit eingespanntem mittig bearbeitetem Rohling von der Seite ;
e) Sonderspannadapter mit eingespannter fertiger Schaufel von vorn ;
f) Sonderspannadapter mit eingespannter fertiger Schaufel von der Seite.

### WEGE ZUR AUSFÜHRUNG DER ERFINDUNG

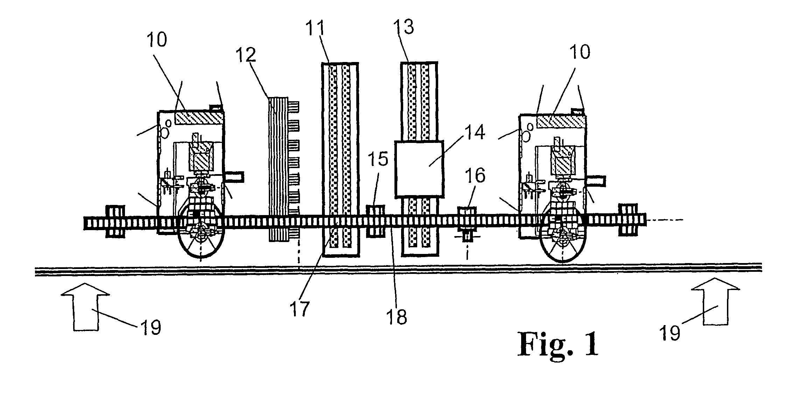

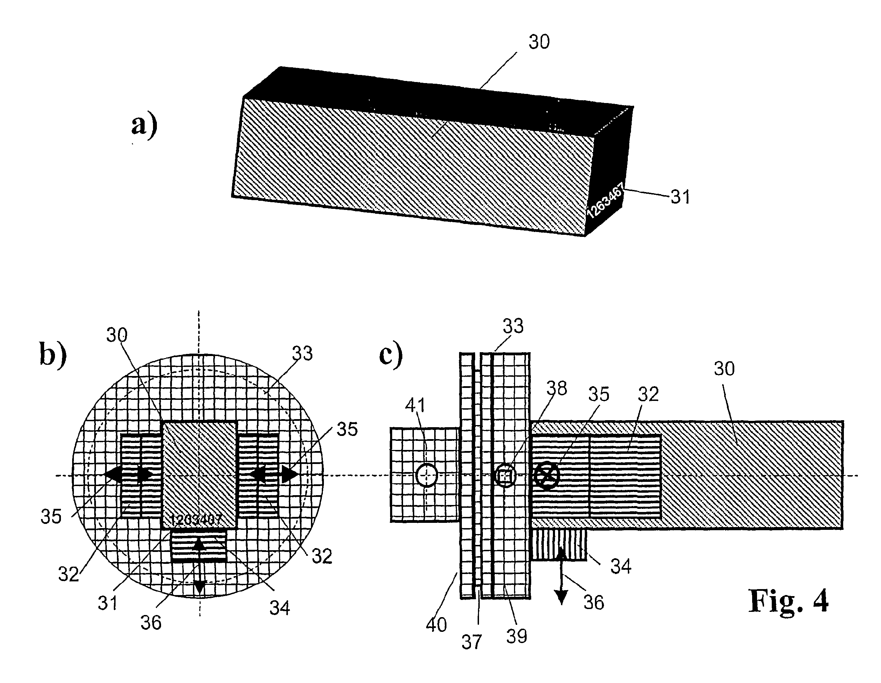

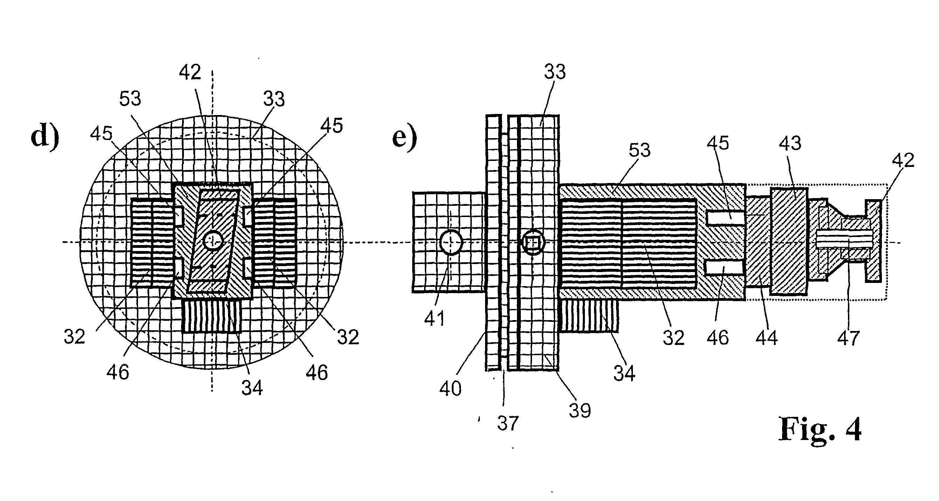

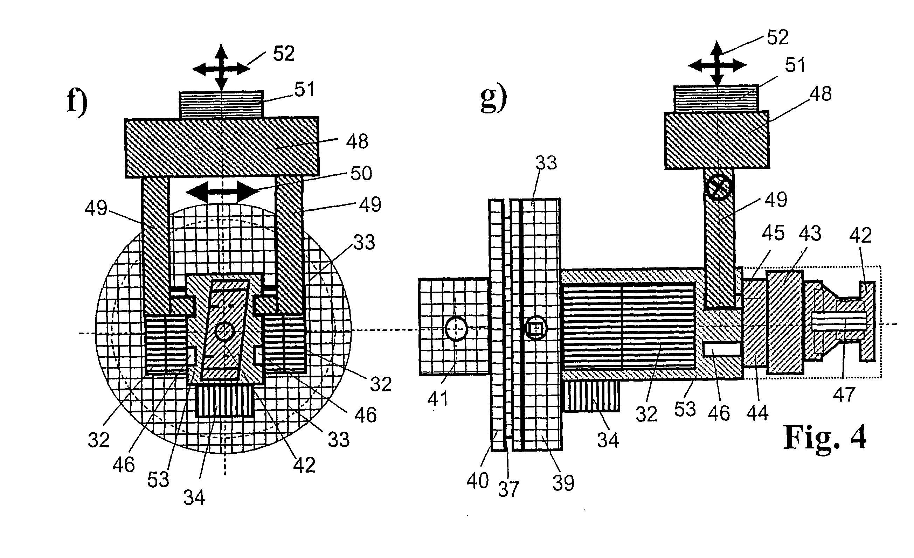

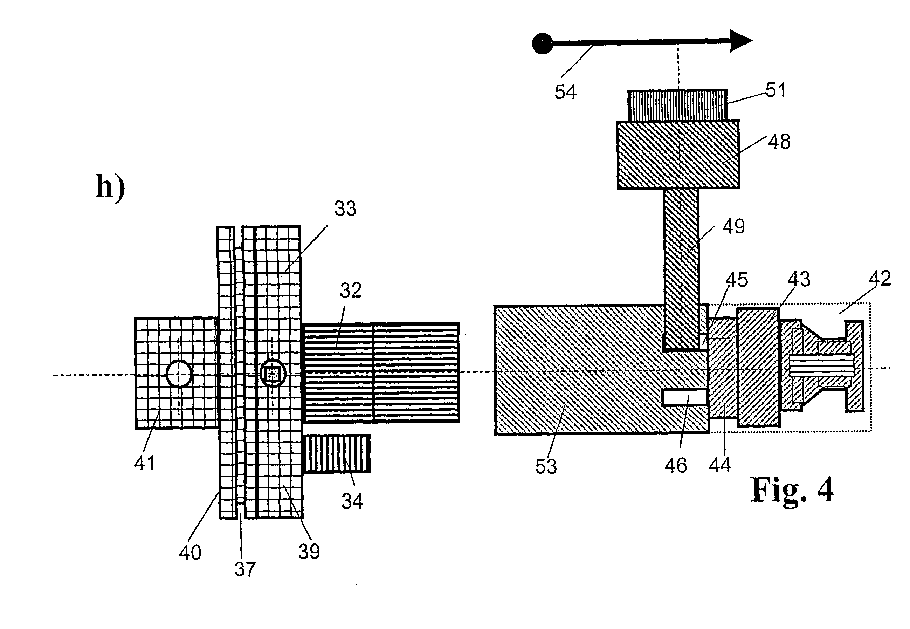

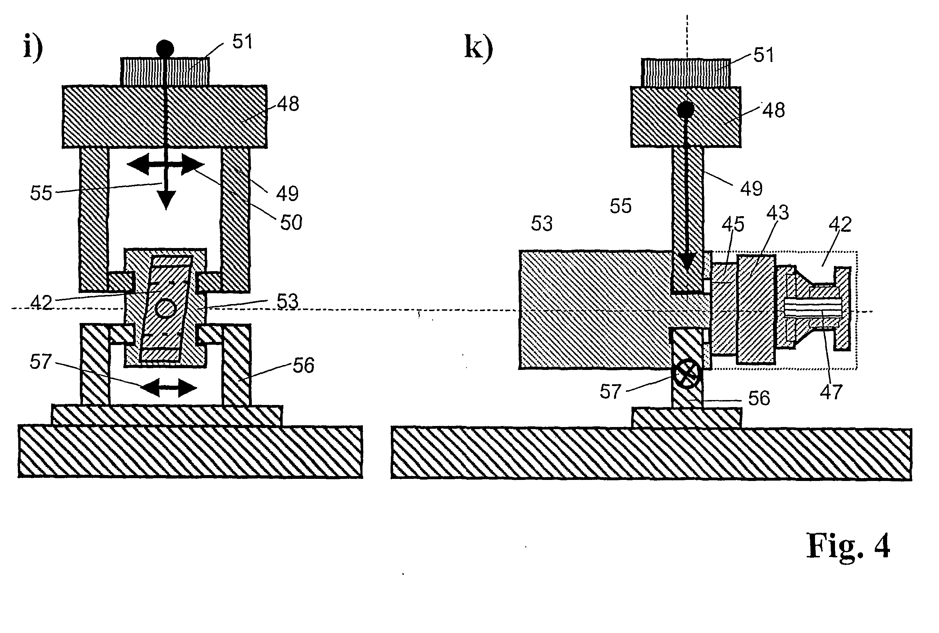

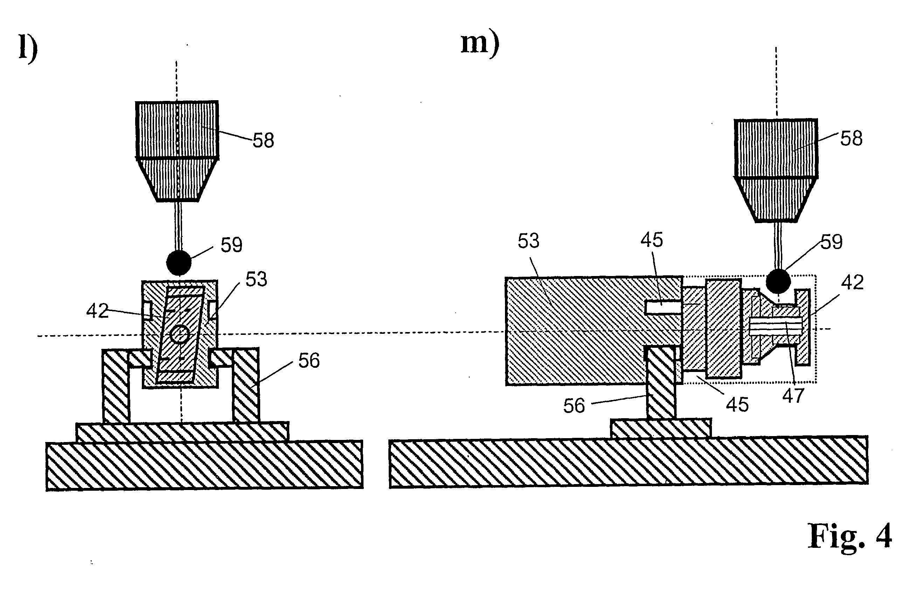

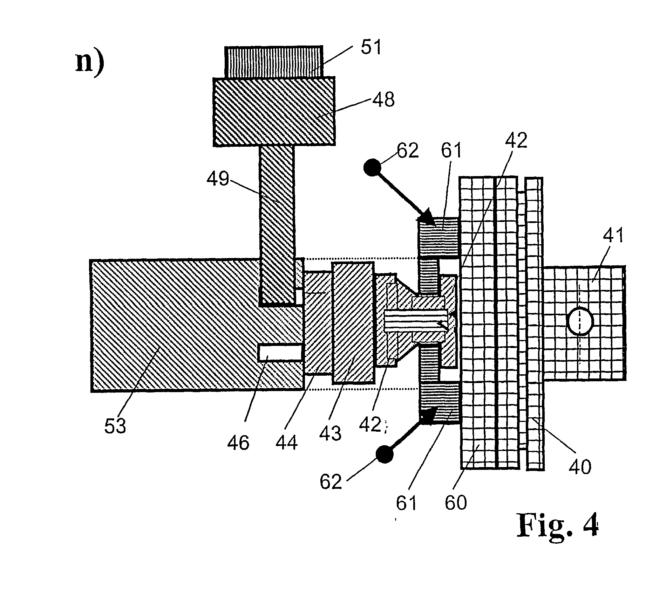

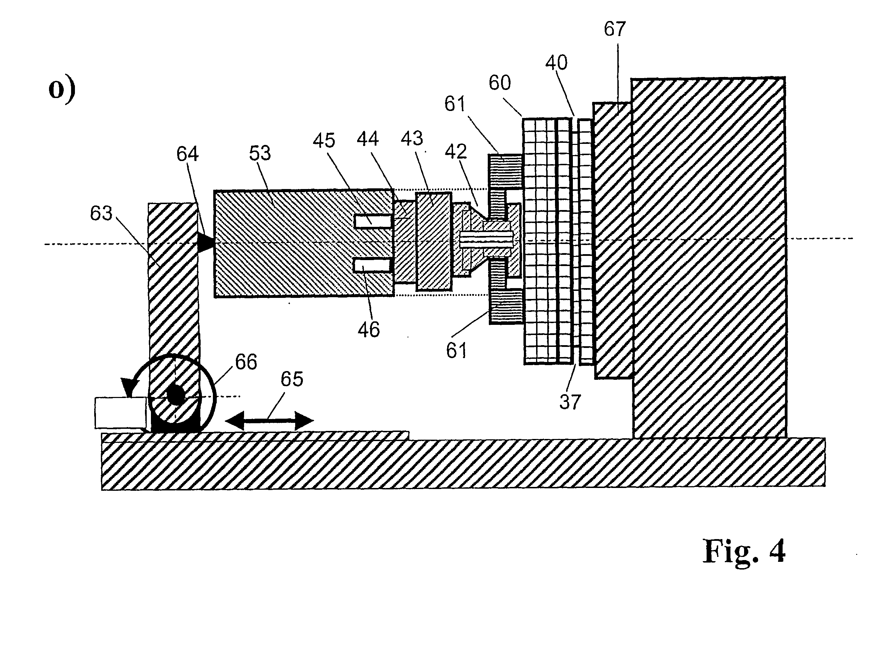

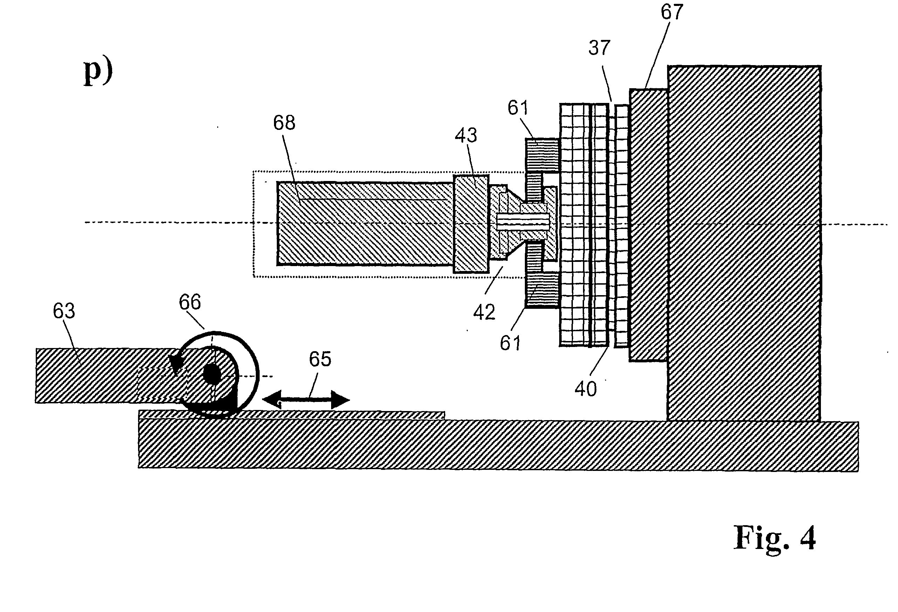

Zunächst sollen anhand der Figuren 1 bis 3 mögliche Lay-outs von Zellen zur erfindungsgemässen Bearbeitung von Werkstücken gezeigt und erläutert werden, anschließend anhand der Figuren 4 und 5 die eigentlichen Verfahrensabläufe der zwei wesentlichen Ausführungsbeispiele.

Fig. 1 zeigt das Layout einer Zelle zur Durchführung des erfindungsgemässen Verfahrens von oben. Es handelt sich dabei um eine kleine Zelle mit zwei Schaufelfräsmaschinen 10, welche über ein Handlingportal 18 mit den zu bearbeitenden Werkstücken beladen respektive entladen werden. Dazu verfügt das Handlingportal 18 über ein Handlingsystem mit einem Greifer 16. Ggf. können auch mehrere derartige Handlingsysteme 16 auf dem gleichen Handlingportal 18 verfahrbar gelagert sein. Das Handlingportal 18 wird über im wesentlichen einer Arbeitsfront 19 abgewandte weitere Einheiten mit Rohlingen mit Hilfe eines Beladebandes 11 in Form eines Paternosters versorgt. Die Rohlinge werden vom Greifer des Handlingsystems 16 gegriffen, dem Adaptermagazin 12 zugeführt, dort in einem Adapter fixiert, einer Materialcodelesestation 15 zugeführt, in welcher der auf dem Rohling angebrachte Materialcode gelesen wird, und anschließend einer der beiden Schaufelfräsmaschinen 10 für den ersten Bearbeitungsschritt übergeben. Diese Transferschritte werden von einer zentralen Kontrolleinheit (nicht dargestellt) koordiniert und gesteuert. Die Kontrolleinheit steuert denn auch entsprechend der Information, welche in der Materialcodelesestation 15 über die Materialbeschaffenheit des Rohlings ermittelt wurde, die zugewiesene Schaufelfräsmaschine an, das heißt es wird das dem Material angepasste Fräsprogramm gestartet.

Nach dem ersten Bearbeitungsschritt in einer der Schaufelfräsmaschinen 10 wird der teilbearbeitete Rohling wiederum vom Handlingsystem 16 ergriffen, und entweder mit Adapter oder ohne Adapter (in diesem Falle wird noch Zwischenstation beim Adaptermagazin 12 gemacht) einer Waschanlage 14 zugeführt, anschließend in einer Messstation vermessen, am Adaptermagazin 12 mit einem Adapter für den zweiten Bearbeitungsschritt gehaltert, und dann für den zweiten Bearbeitungsschritt wiederum einer der beiden Schaufelfräsmaschinen 10 zugewiesen. Dabei kann es sich entweder um die gleiche Schaufel Fräsmaschine handeln, welcher bereits den ersten Bearbeitungsschritt ausgeführt hat, oder aber auch um die zweite. Nach Beendigung des zweiten Bearbeitungsschrittes wird das nun fertige Werkstücken vom Handlingsystem 16 ergriffen, in der Waschstation 14 gewaschen, ausgemessen, und über eine Ausschleusstation 13, ggf. nach zusätzlicher Konservierung respektive Verpackung aus der Zelle entfernt.

Infolge der Tatsache, dass beide Fräsmaschinen sowohl den ersten als auch den zweiten Bearbeitungsschritt durchführen können, ergibt sich der Vorteil, dass der gesamte Herstellungsprozess, d. h. die beiden Bearbeitungsschritte sowie Waschen, Messen, Konservieren, jeweils über das Handlingsystem 16 geregelt und kontrolliert über eine Kontrolleinheit optimal gefahren werden kann. Im Gegensatz zur sogenannten Kistenfertigung können so die Stillstandzeiten der einzelnen Einheiten minimiert werden, und der gesamte Prozess schneller und wirtschaftlicher durchgeführt werden.

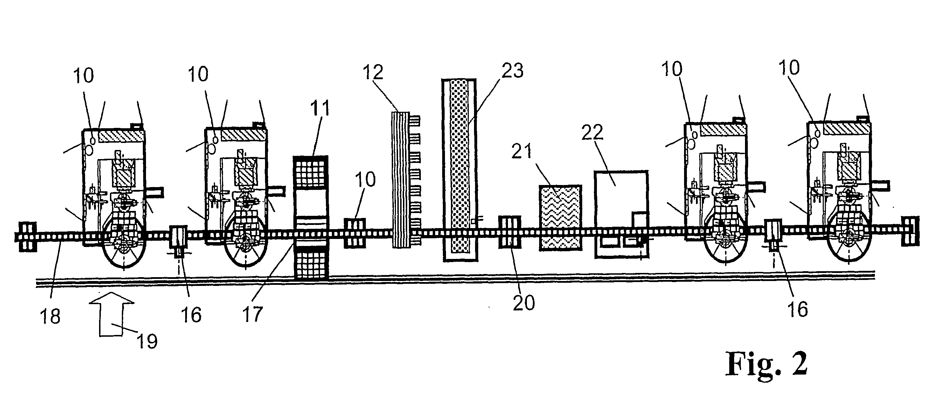

Fig. 2 zeigt eine entsprechende Zelle mittlerer Größe, welche im wesentlichen gleich aufgebaut ist wie die Zelle der Fig. 1, welcher aber vier Schaufelfräsmaschinen 10 aufweist, sowie zusätzlich eine Beschriftungseinheit 20, mit welcher das endgültig bearbeitete, gereinigter, rund vermessene Werkstück mit einer Beschriftung versehen werden kann, welche das Werkstück klar einem bestimmten Bearbeitungszyklus zuweisbar macht und der Dokumentation der erfolgten Qualitätskontrolle dient. Außerdem weist das System eine selbstständig ausgebildete Reinigungseinheit 21, bevorzugt in Form eines Ultraschallbades, auf, sowie eine Messeinheit 22 und eine Ausschleusstation 23. Wiederum wird ein in einer Zelle gemäss Fig. 2 durchgeführter Bearbeitungsprozess von einer in der Figur nicht dargestellten Kontrolleinheit gesteuert.

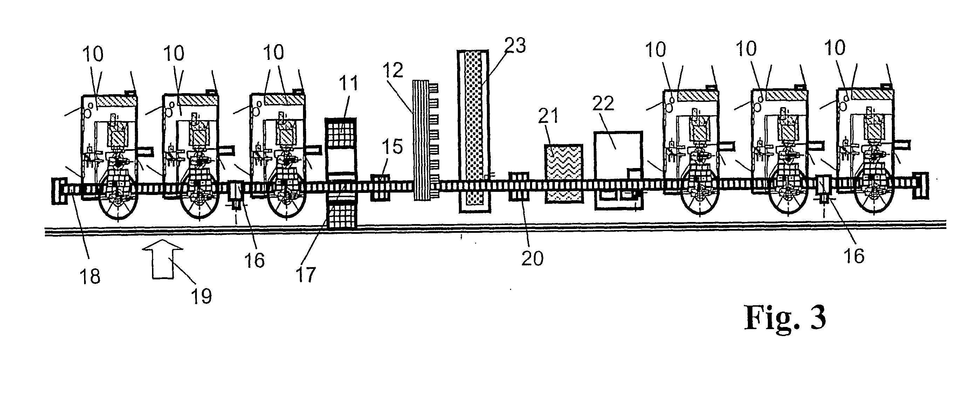

Fig. 3 zeigt eine große Zelle, welche nun sechs Schaufelfräsmaschinen 10 aufweist, welche alle über dasselbe Handlingportal 18 bedient werden. Es sind dafür der zwei Handlingsysteme 16 notwendig. Zellen mit mehr als zwei Fräsmaschinen 10 lassen sich über die Kontrolleinheit noch optimaler steuern, dies insbesondere dann, wenn die einzelnen Bearbeitungsschritte von signifikant unterschiedlicher Länge sind.

Die zwei folgenden Figuren zeigen zwei Ausführungsbeispiele des erfindungsgemässen Verfahrens, dem zweiten für die Herstellung von Turbinenschaufeln jeglicher Art wie z.B. Lauf- oder und Leitschaufeln von Kompressorschaufeln, Dampfturbinenschaufeln, Heissgasschaufeln etc..

Fig. 4a) zeigt einen Rohling 30 in Form eines Quaders. Der Rohling 30 kann aber auch rund sein oder einen anderen beliebigen Querschnitt aufweisen. Es kann sich auch um Grobschmiede- oder Gussrohlinge handeln. Üblicherweise ist ein derartiger Rohling 30 mit einem Materialcode 31 versehen zur Qualitätssicherung (Zahlen, Buchstabenquote gelasert, geschlagen oder gespindelt).

Je nach Schaufeltyp und insbesondere Schaufellänge kommen die nachstehend aufgeführten Verfahrensschritte in der gleichen flexiblen Fertigungszelle (vgl. Figuren 1 bis 3) zum Einsatz.
1. Der Rohling 30 wird auf ein Beladeband 11 (Paternoster) oder eine Beladerampe gelegt, mit der er zu einem Übergabeplatz 17 an das Handlingsystem 16 gelangt.
2. Hier wird der Rohling 30 zur definierten Übergabeposition 17 ausgerichtet.
3. Danach wird der Rohling 30 mit einem Greifer eines der beiden Handlingsysteme 16, welche auf einem Handlingportal 18 laufen, geklemmt und mittels des Handlingsystems 16 an eine Materialcodelesestation 15 gebracht.
4. Der Materialcode wird gelesen und an das Fertigungsleitsystem, die Kontrolleinheit der Zelle, gemeldet.
5. Hierdurch erfolgt eine eindeutige Registrierung und Zuordnung des Rohlings 30 zu einer Produktionsnummer und Seriennummer. Sie wird später auf eine definierte Fläche mittels einer Beschriftungsstation 20 geschrieben. Mit ihr kann die Schaufel und deren Qualitätsdaten (Dokumente) wie auch alle durchlaufene Fertigungsschritte und deren Einstellungen, eindeutig reproduziert werden, was für den Retrofitfall von grosser Bedeutung ist.
6. Danach wird der Rohling 30 mittels des Handlingsystems 16 zu einer der Schaufelfräsmaschinen 10 gebracht. -
7. Der Rohling 30 wird dann mittels der Ram des Handlingsystems 16 in den Be- und Entladebereich der Schaufelfräsmaschine 10 auf Klemmhöhe und dann in einen speziellen Spannadapter 33, wie er in den Figuren 4b) und c) dargestellt ist, eingeschoben. Hier wird er durch ein Spann- und Klemmsystem eindeutig fixiert und geklemmt. Der Spannadapter 33 ist zu diesem Zwecke in einem Adapterwechsler (im Be- und Entladebereich der Schaufelfräsmaschine eindeutig fixiert und geklemmt. Der Spannadapter 33 besteht dabei aus zwei Spannbacken 32, welche einen Backenklemmhub 35 aufweisen, und den Rohling 30 seitlich klemmen. Zur Bewegung der Spannbacken 32 ist ein Klemmschraubmechanismus 38 vorgesehen. Zur Begrenzung nach unten weist der Spannadapter 33 einen beweglichen Anschlag 34 auf, welcher einen Hub 36 hat. Der Adapter 33 selbst ist gewissermaßen zweigeteilt, und weist einen bausteilunspezifischen Halterungsteil 40 auf (z. B. Standard-HSK), welcher mit einem Klemmzylinder 41 zur Fixierung im Futter der Schaufelfräsmaschine 10 vorgesehen ist. Außerdem weist der Adapter 33 einen bauteilspezifischen Aufsatz 39 auf, welcher die obengenannten Spannbacken 32 trägt. Eines der beiden Elemente des Adapter 33 weist außerdem eine Greiferrille 37 auf, welche dazu dient, den Adapter 33 in wohldefinierter Positionierung entweder dem Greifer zu übergeben, oder im Adaptermagazin zu haltern.
8. Der Greifer des Handlingsystems wird gelöst und aus den Be- und Entladebereich der Schaufelfräsmaschine 10 gefahren. Ihm werden durch das Leitsystem andere Aufgaben zugeordnet.
9. Mittels der Adapterwechsler wird dann der Spannadapter 33 mit dem gespannten Rohling 30 in die A-Rundachse der Werkzeugmaschine, die sich im Arbeitsraum der Maschine befindet, eingewechselt. (Prinzip wie beim Werkzeugwechsel).
10. Hier wird dann mit den entsprechenden NC-Programmen und Werkzeugen die komplette Fusspartie 42 sowie 43 der zu fertigenden Turbinenschaufel hergestellt (vgl. Fig. 4d) und e)). Ferner wird bei längeren Turbinenschaufeln ein Teil der Kanal- bzw. Blattkontur 44 vor- oder fertiggefräst.
11. Zuletzt werden an zwei gegenüberliegenden Seiten der Aussenkontur des Rohlings 30 im unbearbeiteten Teil 53 jeweils zwei definierte Spannflächen 45 und 46 für die spätere Greiferübernahme und Messpositionfixierung hergestellt (vgl. Figuren 4d) und e)).
12. Danach wird die so halbfertige (Fusspartie ist einbaufertig) Turbinenschaufel mittels des Adapterwechsler wieder in den Be- und Entladebereich der Schaufelfräsmaschine geschwenkt.
13. Der Greifer 48 des Handlingsystems 16 wird dann in den Be- und Entladebereich der Schaufelfräsmaschine eingefahren und fixiert und klemmt den Rohling 30 mit den beiden Spannarme 49, welche über einen Spannhub 50 verfügen, in den beiden oberen Spannflächen 45 (vgl. Figuren 4f) und g)). Danach wird die Klemmung des Rohlings 30 im Spannadapter 33 gelöst und das Handlingsystem 16 fährt den im Greifer 48 geklemmten halbfertigen Rohling aus dem Spannadapter 33 und aus dem Be- und Entladebereich der Schaufelfräsmaschine (vgl. Fig. 4h)).
14. Der halbfertige Rohling wird mittels des Handlingsystems 16 zur Reinigung in ein Ultraschallbad 21 gebracht. Hier wird der halbfertige Rohling und ein Teil des Greifers gereinigt.
15. Nach der Reinigung wird der halbfertige Rohling mittels des Handlingsystems 16 zur Messposition, die sich auf der Messmaschine 22 befindet, gebracht.
16. Hier wird der halbfertige Rohling in einer speziellen Spann- und Klemmstation 56 in den beiden unteren Spannflächen 46 fixiert und geklemmt (vgl. Figuren 4i) und k)). Danach wird der Greifer 49 gelöst und mittels des Handlingsystems 16 aus dem Arbeitsbereich der Messmaschine 22 gefahren. Ihm werden durch das Leitsystem andere Aufgaben zugeordnet.
17. In dieser Messposition wird dann die komplette Fusspartie und hier insbesondere die späteren Funktionsflächen mit einem über einen Messkopf 59 verfügenden Messtaster 58 vermessen (vgl. Figuren 4 l) und m)). Die Messberichte werden von der Messmaschine erstellt und an das Leitsystem weitergemeldet. Ferner werden gegebenenfalls Korrekturmasse für eine weitere Fussbearbeitung erstellt und mittels des Leitsystems an die betroffene Schaufelfräsmaschine geleitet, um hier NC-Programmkorrekturen vorzunehmen. Des weiteren werden Referenzmasskorrekturen an die nachfolgende Kanal- bzw. Blattbearbeitungsmaschine über das Leitsystem gesendet.
18. Nach der Turbinenschaufelfussvermessung wird der halbfertige Rohling respektive die halbfertige Schaufel mittels des Greifers 48 des Handlingsystems 16 beiden oberen Spannflächen 45 fixiert und geklemmt. Die Klemmung in der speziellen Spann- und Klemmstation 56 wird gelöst und der halbfertige Rohling mittels des Handlingsystems 16 in den Be- und Entladebereich der Schaufelfräsmaschine 10 gebracht.
19. Hier schiebt das Handlingsystem 16 indessen Greifer 48 der halbfertige Rohling geklemmt ist, den halbfertigen Rohling bzw. die Fusspartie der halbfertigen Turbinenschaufel definiert in einen Sonderspannadapter 60 so ein, dass die Fusspartie mittels der Formspannelemente 61 des Sonderspannadapters 60 eindeutig definiert fixiert und geklemmt werden können. Wiederum ist der Adapter zweiteilig ausgeführt, mit einem bauteilunspezifischen Halterungsteil 40 (z. B. mit HSK-Zylinder) und einem Aufsatz 60. Der Sonderspannadapter 60 verfügt über dem jeweiligen Werkstück angepasste Sonderbacken 61, welche im in Fig. 4n) dargestellten Fall außerdem einen speziellen Backenspannhub 62 aufweisen, damit die Fußpartie 42 optimal fixiert werden kann. Der Sonderspannadapter 60 ist in einem Adapterwechsler im Be- und Entladebereich der Schaufelfräsmaschine eindeutig fixiert und geklemmt.
20. Mittels der Adapterwechsler wird dann der Sonderspannadapter 60 mit der halbfertigen Turbinenschaufel in die A-Rundachse der Schaufelfräsmaschine 10, die sich im Arbeitsraum der Maschine befindet, eingewechselt. (Prinzip wie beim Werkzeugwechsel)
21. Hier wird dann, wenn notwendig im ersten Schritt ein Zentrum an das freie Kopfende des halbfertigen Rohlings angebracht. Dies geschieht in den meisten Fällen durch eine Zentrierung.
22. Wenn ein Zentrum angebracht ist, wird dann durch Umklappen und Verfahren eines Reitstockes 63 dessen Reitstockspitze 64 in das Zentrum eingefahren und so das halbfertige Werkstück eindeutig fixiert und axial verspannt (vgl. Fig. 4o)).
23. Wenn nicht turbinenschaufelspezifisch notwendig können die Schritte 21 bis 22 entfallen.
24. Hiernach wird dann mittels der entsprechenden NC-Programme und Werkzeuge im Falle mit Zentrum die komplette Kanal-, Blattpartie der zu fertigenden Turbinenschaufel hergestellt.
25. Zur Herstellung der Kopfpartie wird dann die Reitstockspitze 64 aus dem Zentrum gefahren und der Reitstock 63 entlang 66 zurückgekippt, so dass die Kopfpartie frei zugänglich wird (vgl. Fig. 4p)).
26. Bei halbfertigen Werkstücken ohne Zentrum wird die Kopfpartie direkt im Anschluss an die Kanal- bzw. Blattpartieherstellung durch entsprechenden NC-Programme und Werkzeuge hergestellt.
27. Danach wird die so fertig hergestellte Turbinenschaufel 68 mittels des Adapterwechslers wieder in den Be- und Entladebereich der Schaufelfräsmaschine 10 geschwenkt.
28. Der Greifer 48 des Handlingsystems 16 wird dann in den Be- und Entladebereich der Schaufelfräsmaschine 10 eingefahren und fixiert und klemmt den Sonderspannadapter 60 mit der fertigen Turbinenschaufel 68 an einer speziellen Position, so dass er den Sonderspannadapter 60 nach dessen Lösung aus seiner Klemmung aus dem Be- und Entladebereich der Schaufelfräsmaschine bringen kann.
29. Der Sonderspannadapter 60 mit der fertigen Turbinenschaufel 68 wird mittels des Handlingsystems 16 zur Reinigung in ein Ultraschallbad 21 gebracht. Hier wird er, die Turbinenschaufel 68 und ein Teil des Greifers 48 gereinigt.
30. Nach der Reinigung wird die Turbinenschaufel 68 mittels des Handlingsystems 16 zur Messposition, die sich auf der Messmaschine 22 befindet, gebracht.
31. Hier wird der Sonderspannadapter 60 mit der fertigen Turbinenschaufel 68 in einer speziellen Spannstation fixiert und geklemmt. Danach wird der Greifer 48 gelöst und mittels des Handlingsystems 16 aus dem Arbeitsbereich der Messmaschine 22 gefahren. Ihm werden durch das Leitsystem andere Aufgaben zugeordnet.
32. In dieser Messposition wird dann die komplette Turbinenschaufel 68 vermessen. Die Messberichte werden von der Messmaschine 22 erstellt und an das Leitsystem weitergemeldet. Ferner werden gegebenenfalls Korrekturmasse für eine weitere Kanalbearbeitung erstellt und mittels des Leitsystems an die betroffene Schaufelfräsmaschine geleitet, um hier NC-Programmkorrekturen vorzunehmen. Mit diesen Messdaten wird dann die Schaufeldokumentation vervollständigt.
34. Nach der Turbinenschaufelvermessung wird mittels des Greifers 48 des Handlingsystems 16 der Sonderspannadapter 60 mit der fertigen Turbinenschaufel 68 nach dessen Lösung in der speziellen Spannstation zur Beschriftungsstation 20 gebracht. Hier wird die fertige Turbinenschaufel mit einem eindeutigen reproduzierbaren Code durch Laser-, Gravier- oder eine andere Beschriftungsart versehen.
35. Nach der Beschriftungsstation 20 wird mittels des Greifers 48 des Handlingsystems 16 der Sonderspannadapter 60 mit der fertigen Turbinenschaufel 68 an die Ausschleusklemmstation gebracht. Hier wird der Sonderspannadapter 60 in einer Klemmaufnahme fixiert und geklemmt. Der Greifer 48 gibt den Sonderspannadapter 60 frei.
36. Die Formspannelemente 61 werden durch eine Entrieglungseinheit gelöst, so dass die einbaufertige Turbinenschaufel 68 nach unten in den Aufnahmebehälter der Wasch- und Konservierungsanlage 14, respektive 21 fällt. Sollte dies nicht automatisch erfolgen, kann das Entfernen und Hineinlegen der Turbinenschaufel 68 auch mittels des Greifers 48 des Handlingsystems 16 erfolgen.
37. Als letzter Schritt wird die Turbinenschaufel 68 durch die Wasch- und Konservierungsanlage 14 transportiert, wo sie gewaschen und wenn notwendig konserviert wird.
38. Sollte ein längerer Transport zu einem entfernten Montageplatz anstehen, wird hinter der normalen Ausschleusstation, wo die Turbinenschaufel normalerweise in eine Rastepalette gelegt wird, eine Verpackungsschweissstation angeordnet, wo die Turbinenschaufel für den weiten Transport eingeschweisst wird.

Zusammengefasst umfasst das Verfahren, bei welchem zunächst das eine Ende und anschließend das andere Ende bearbeitet wird und wie es in Fig. 4 dargestellt ist, die folgenden Schritte:
- Rohteil einschleusen
- Rohteil Prüfnummer lesen
- Rohteil in Maschine plazieren
- Fußbearbeitung
- Werkstück entnehmen und neues Teil einlegen
- Werkstück reinigen
- In Messmaschine einlegen
- Fuß messen
   (Korrekturen berechnen und an Maschine melden)
- Werkstück aus Messmaschine entnehmen und in nächste Maschine einlegen
- Blatt- und Kopfbearbeitung
- Werkstück mit Adapter entnehmen
- Werkstück reinigen
- In Messmaschine einlegen
- Blatt- und Kopf messen
   (Korrekturen berechnen und an Maschine melden)
- Werkstück entnehmen
- Werkstück beschriften
- Werkstück ausschleusen (an Waschmaschine aus Adapter entfernen)

Fig. 5 zeigt ein anderes erfindungsgemäßes Ausführungsbeispiel des Verfahrens, bei welchem im ersten Bearbeitungsschritt der mittlere Bereich des Werkstücks bearbeitet wird und im zweiten Bearbeitungsschritt die beiden (oder nur einer) Endbereiche (letzte Spannung an den Rhombusflächen). Das Verfahren umfasst in seiner Gesamtheit folgenden Schritte:
1. Der Rohling 30 wird auf ein Beladeband 11 (Paternoster) oder eine Beladerampe gelegt, mit der er zu einem Übergabeplatz 17 an das Handlingsystem 16 gelangt.
2. Hier wird der Rohling 30 zur definierten Übergabeposition 17 ausgerichtet.
3. Danach wird der Rohling 30 mit einem Greifer eines der beiden Handlingsysteme 16, welche auf einem Handlingportal 18 laufen, geklemmt und mittels des Handlingsystems 16 an eine Materialcodelesestation 15 gebracht.
4. Der Materialcode wird gelesen und an das Fertigungsleitsystem, die Kontrolleinheit der Zelle, gemeldet.
5. Hierdurch erfolgt eine eindeutige Registrierung und Zuordnung des Rohlings 30 zu einer Produktionsnummer und Seriennummer. Sie wird später auf eine definierte Fläche mittels einer Beschriftungsstation 20 geschrieben. Mit ihr kann die Schaufel und deren Qualitätsdaten (Dokumente) wie auch alle durchlaufene Fertigungsschritte und deren Einstellungen, eindeutig reproduziert werden, was für den Retrofitfall von grosser Bedeutung ist.
6. Danach wird der Rohling 30 mittels des Handlingsystems 16 zu einer der Schaufelfräsmaschinen 10 gebracht.
7. Der Rohling 30 wird dann mittels der Ram des Handlingsystems 16 in den Be- und Entladebereich der Schaufelfräsmaschine 10 auf Klemmhöhe und dann in einen speziellen Spannadapter 33, wie er in Fig. 5 a) dargestellt ist, eingeschoben. Hier wird er durch ein Spann- und Klemmsystem eindeutig fixiert und geklemmt. Der Spannadapter 33 ist zu diesem Zwecke in einem Adapterwechsler im Be- und Entladebereich der Schaufelfräsmaschine 10 eindeutig fixiert und geklemmt. Der Spannadapter 33 besteht dabei aus zwei Spannbacken 70, welche einen Backenklemmhub 71 aufweisen, und den Rohling 30 seitlich klemmen. Zur Bewegung der Spannbacken 70 ist z. B. ein Klemmschraubmechanismus (nicht dargestellt) vorgesehen. Zur Begrenzung nach unten kann der Spannadapter 33 außerdem wie im vorigen Ausführungsbeispiel einen beweglichen Anschlag aufweisen. Der Adapter 33 selbst ist gewissermaßen zweigeteilt, und weist einen bausteilunspezifischen Halterungsteil 40 auf (z. B. Standard-HSK), welcher mit einem Klemmzylinder 41 zur Fixierung im Futter der Schaufelfräsmaschine 10 vorgesehen ist. Außerdem weist der Adapter 33 einen bauteilspezifischen Aufsatz 72 auf, welcher die obengenannten Spannbacken 70 trägt. Eines der beiden Elemente des Adapters 33 weist außerdem eine Greiferrille 37 auf, welche dazu dient, den Adapter 33 in wohldefinierter Positionierung entweder dem Greifer zu übergeben, oder im Adaptermagazin zu haltern.
8. Der Greifer des Handlingsystems wird gelöst und aus den Be- und Entladebereich der Schaufelfräsmaschine 10 gefahren. Ihm werden durch das Leitsystem andere Aufgaben zugeordnet.
9. Mittels der Adapterwechsler wird dann der Spannadapter 33 mit dem gespannten Rohling 30 in die A-Rundachse der Werkzeugmaschine, die sich im Arbeitsraum der Maschine befindet, eingewechselt. (Prinzip wie beim Werkzeugwechsel).
10. Hier wird dann, wenn notwendig im ersten Schritt ein Zentrum an das freie Kopfende des Rohlings 30 angebracht. Dies geschieht in den meisten Fällen durch eine Zentrierung.
11. Wenn ein Zentrum angebracht ist, wird anschließend durch Umklappen und Verfahren eines Reitstockes 63 dessen Reitstockspitze 64 in das Zentrum eingefahren und der Rohling 30 eindeutig fixiert und axial verspannt.
12. Wenn nicht Turbinenschaufelspezifisch notwendig können die Schritte 10 bis 12 entfallen.
13. Hiernach wird dann mittels entsprechender NC-Programme und Werkzeuge im Falle mit oder ohne Zentrum die komplette Turbinenschaufel (Fuss-, Kanal-, Blatt, Kopfpartie) der zu fertigenden Turbinenschaufel hergestellt. Auf der Fuss- und Kopfseite wird ein Einschnitt 76 und 77 gefräst, so dass später die Restpartien 74 und 75 des Rohlings angefräst werden können (vgl. Fig. 5a)).
14. Danach wird die so nahezu fertige Turbinenschaufel mittels des Adapterwechslers wieder in den Be- und Entladebereich der Schaufelfräsmaschine geschwenkt.
15. Der Greifer des Handlingsystems wird dann in den Be- und Entladebereich der Schaufelfräsmaschine eingefahren und fixiert und klemmt den Spannadapter 33 mit der beinahe fertigen Turbinenschaufel an einer speziellen Position, so das er den Spannadapter 33 nach dessen Lösung aus seiner Klemmung aus dem Be-und Entladebereich der Schaufelfräsmaschine bringen kann.
16. Der Spannadapter 33 mit der nahezu fertigen Turbinenschaufel wird mittels des Handlingsystems 16 zur Reinigung in ein Ultraschallbad 21 gebracht. Hier wird der Spannadapter 33 mit der nahezu fertigen Turbinenschaufel und ein Teil des Greifers gereinigt.
17. Nach der Reinigung wird der Spannadapter 33 mit der nahezu fertigen Turbinenschaufel mittels des Handlingsystems 16 zur Messposition, die sich auf der Messmaschine 22 befindet, gebracht (vgl. Fig. 5b)).
18. Hier wird der Spannadapter 33 mit der nahezu fertigen Turbinenschaufel in einer speziellen Spannstation fixiert und geklemmt. Danach wird der Greifer gelöst und mittels des Handlingsystems 16 aus dem Arbeitsbereich der Messmaschine 22 gefahren. Ihm werden durch das Leitsystem andere Aufgaben zugeordnet.
19. In dieser Messposition wird dann die komplette Turbinenschaufel vermessen. Die Messberichte werden von der Messmaschine 22 erstellt und an das Leitsystem weitergemeldet. Ferner werden gegebenenfalls Korrekturmasse für eine weitere Kanalbearbeitung erstellt und mittels des Leitsystems an die betroffene Schaufelfräsmaschine geleitet, um hier NC-Programmkorrekturen vorzunehmen.
20. Mit diesen Messdaten wird dann die Schaufeldokumentation vervollständigt.
21. Der Greifer des Handlingsystems 16 wird dann in die Messmaschine 22 eingefahren und entnimmt nach dem Lösen des Spannadapters 33 die nahezu fertige und vermessene Turbinenschaufel und fixiert diese dann auf der zweiten Position geklemmt auf den Sonderspannadapter 78 (vgl. Fig. 5c). Die beinahe fertige Turbinenschaufel kommt dabei quer zur Achse des Sonderspannadapters 78 zu liegen, und wird von zwei auswechselbaren Spannbacken 79, welche über einen Klemmenhub 80 verfügen, und relativ zueinander entlang 81 verschiebbar sind, fixiert. Die Fixierung geschieht dabei auf den Rhombusflächen der beinahe fertigenden Turbinenschaufel.
22. Nach dem Ausrichten der Turbinenschaufel wird diese dann im Sonderspannadapter 78 endgültig geklemmt. Danach wird die nahezu fertige hergestellte Turbinenschaufel mittels des Greifers des Handlingsystems 16 aus der Messmaschine 22 gefahren und zur Schaufefräsmaschine gebracht.
24. Der Greifer des Handlingsystems wird dann in den Be- und Entladebereich der Schaufelfräsmaschine eingefahren und fixiert und klemmt den Sonderspannadapter 78 mit der nahezu fertigen Turbinenschaufel im Adapterwechsler.
25. Mittels des Adapterwechslers wird der Sonderspannadapter 78 mit der nahezu fertigen Turbinenschaufel in die A-Rundachse der Werkzeugmaschine, die sich im Arbeitsraum der Maschine befindet, eingewechselt. (Prinzip wie beim Werkzeugwechsel)
26. Hiernach wird dann mittels entsprechender NC-Programme und Werkzeuge die Kopf- und Fusspartie der Turbinenschaufel fertiggefräst (vgl. Fig. 5e) und f)).
27. Danach wird der Sonderspannadapter 78 mit der fertigen Turbinenschaufel mittels des Adapterwechslers wieder in den Be- und Entladebereich der Schaufelfräsmaschine 10 geschwenkt.
28. Der Greifer des Handlingsystems wird dann in den Be- und Entladebereich der Schaufelfräsmaschine eingefahren und fixiert und klemmt den Sonderspannadapter 78 mit der fertigen Turbinenschaufel, so dass der Sonderspannadapter 78 nach dessen Lösung aus seiner Klemmung aus dem Be-und Entladebereich der Schaufelfräsmaschine bringen kann.
29. Der Sonderspannadapter 78 mit der fertigen Turbinenschaufel wird mittels des Handlingsystems 16 zur Reinigung in ein Ultraschallbad 21 gebracht. Hier wird der Sonderspannadapter mit der fertigen Turbinenschaufel 82 und ein Teil des Greifers gereinigt.
30. Nach der Reinigung wird der Sonderspannadapter 78 mit der fertigen Turbinenschaufel 82 mittels des Handlingsystems 16, wenn nochmals erforderlich, zur Messposition, die sich auf der Messmaschine 22 befindet, gebracht.
31. In dieser Messposition wird dann die Restpartie der Turbinenschaufel 82, wenn erforderlich, vermessen. Die Messberichte werden von der Messmaschine erstellt und an das Leitsystem weitergemeldet. Ferner werden gegebenenfalls Korrekturmasse für eine weitere Kopf- und Fussbearbeitung erstellt und mittels des Leitsystems an die betroffene Schaufelfräsmaschine geleitet, um hier NC-Programmkorrekturen vorzunehmen.
32. Mit diesen Kopf- und Fusskonturmessdaten wird dann die Schaufeldokumentation vervollständigt.
33. Nach der Turbinenschaufelvermessung wird mittels des Greifers des Handlingsystems 16 der Sonderspannadapter 78 mit der fertigen Turbinenschaufel 82 nach dessen Lösung in der speziellen Spannstation zur Beschriftungsstation 20 gebracht. Hier wird die fertige Turbinenschaufel 82 mit einem eindeutigen reproduzierbaren Code durch Laser-, Gravier- oder eine andere Beschriftungsart versehen.
34. Nach der Beschriftungsstation 20 wird mittels des Greifers des Handlingsystems 16 der Sonderspannadapter 78 mit der fertigen Turbinenschaufel 82 an die Ausschleusklemmstation gebracht. Hier wird der Sonderspannadapter in einer Klemmaufnahme fixiert und geklemmt. Der Greifer gibt den Sonderspannadapter frei.
35. Die Formspannelemente 79 werden durch eine Entrieglungseinheit gelöst, so dass die einbaufertige Turbinenschaufel nach unten in den Aufnahmebehälter der Wasch- und Konservierungsanlage fällt. Sollte dies nicht automatisch erfolgen kann das Entfernen und Hineinlegen der Turbinenschaufel 82 auch mittels des Greifers des Handlingsystems erfolgen.
36. Als letzter Schritt wird die Turbinenschaufel durch die Wasch- und Konservierungsanlage transportiert, wo sie gewaschen und wenn notwendig konserviert wird.
37. Sollte ein längerer Transport zu einem entfernten Montageplatz anstehen, wird hinter der normalen Ausschleusstation 13, wo die Turbinenschaufel normalerweise in eine Rastepalette gelegt wird, eine Verpackungsschweissstation angeordnet, wo die Turbinenschaufel für den weiten Transport eingeschweisst wird.

Die einzelnen Fertigungsprozesse können durch das Leitsystem auf alle Schaufelfräsmaschinen nach Bedarf zugewiesen werden. Eine feste Zuweisung, wie oben beschrieben, ist nicht zwingend notwendig.

Sollten alle Operationsstationen nach Punkt 14 gelegt sein, kann das Werkstück auch in einem Werkstückpufferplatz zwischengelagert werden.

Sollten alle Operationsstationen nach Punkt 28 gelegt sein, kann das Werkstück auch im Adaptermagazin 12 zwischengelagert werden.

Das oben genannte Verfahren eignet sich zur Herstellung von Turbinenschaufeln folgender Spezifikationen:

| | | | |
|---|---|---|---|
| Schaufelqualitäten: | Oberfläche | N4 - N5 | |
| | Toleranzen | +/- 0,002 mm | |
| Abmasse: | Länge | | > 10 mm |
| | | | < 400 mm oder < 800 mm |
| | | Rotierender Durchmesser > | 50 mm |
| | | | < 400 mm oder < 800 mm |
| | | Gewicht | > 0,01 kg |
| | | | < 40 kg oder < 140 kg |

Das Verfahren erlaubt die Herstellung einer Turbinenschaufel in zwei Fertigungs- und Messschritten, die Turbinenschaufel ist am Ende einbaufertig und qualitätsdokumentiert. Alle Transporte, Spannoperationen, Messkorrekturkreisläufe etc. laufen innerhalb der Zelle automatisch ab. An der Ausschleusstation kann dann eine qualitätsdokumentierte, wenn notwendig konservierte Schaufel entnommen werden.

Es zeigt sich, dass die Durchlaufzeit einer Reihe mit dem oben vorgeschlagenen Verfahren weniger als einen Tag beträgt, wohingegen bei einer konventionellen Herstellung einer Turbinenschaufel wesentlich mehr und bis zu 14 Tage nötig sind.

### BEZUGSZEICHENLISTE

- 10: Schaufelfräsmaschine
- 11: Beladeband
- 12: Adaptermagazin
- 13: Ausschleusstation
- 14: Wasch- und Konservierungsanlage
- 15: Materialcodelesestation
- 16: Handlingsystem mit Greifer
- 17: Übergabeposition
- 18: Handlingportal
- 19: Arbeitsfront
- 20: Beschriftungseinheit
- 21: Reinigungseinheit (Ultraschall)
- 22: Messeinheit
- 23: Ausschleusstation
- 30: Rohling
- 31: Materialcode
- 32: Spannbacken
- 33: Spannadapter für Rohling
- 34: beweglicher Anschlag
- 35: Backenklemmhub
- 36: Hub von 34
- 37: Greiferrille für Wechsler
- 38: Klemmschraubmechanismus
- 39: bauteilspezifischer Aufsatz von 33
- 40: bauteilunspezifischer Halterungsteil von 33
- 41: Klemmzylinder von 41
- 42: Fußgeometrie
- 43: Rhombusgeometrie
- 44: Kanal-Blattbereich
- 45: obere definierte Spannflächen
- 46: untere definierte Spannflächen
- 47: Fläche für Schaufelcode
- 48: Greifer
- 49: Spannarme von 48
- 50: Spannhub von 49
- 51: Handlingram
- 52: Handling- bzw. Greifer Z-Hub
- 53: unbearbeiteter Teile des Rohlings
- 54: Ausfahrrichtung des Greifers
- 55: Handlinghub
- 56: Greiferzange
- 57: Spannhub von 56
- 58: Messtaster
- 59: Messkopf
- 60: Sonderspannadapter
- 61: Sonderbacken
- 62: Backenspannhub von 61
- 63: Reiststock
- 64: Zentriernase
- 65: Verschiebbarkeit von 63
- 66: Abklappen von 63
- 67: A-Achse der Schaufelfräsmaschine
- 68: fertige Schaufel
- 70: Spannbacken
- 71: Backenklemmhub
- 72: bauteilspezifischer Aufsatz von 33
- 73: Kopfteil der Schaufel
- 74: unbearbeiteter Überstand am Kopfteil der Schaufel
- 75: unbearbeiteter Überstand am Fußteil der Schaufel
- 76: Einschnitt beim Kopfteil
- 77: Einschnitt beim Fußteil
- 78: Sonderspannadapter
- 79: auswechselbare Spannbacken
- 80: Klemmhub von 79
- 81: Verschiebung von 79
- 82: fertige Schaufel

## Patentansprüche

1. Verfahren zur Rundum-Bearbeitung eines Rohlings (30) mit wenigstens einer Bearbeitungsmaschine wie beispielsweise einer Fräsmaschine (10), bei dem
der Rohling (30) in einem ersten Bearbeitungsschritt von wenigstens einem ersten Adapter (33, 39, 72) gehalten wird und von einer Bearbeitungsmaschine resp. Fräsmaschine (10) ein erster Bereich (42, 43, 44, 47 ; 42,43,44, 47, 73) in seine endgültige, der bestimmungsgemäßen Verwendung entsprechende Teilform gebracht wird, **dadurch gekennzeichnet, dass**
in einem zweiten Bearbeitungsschritt der teilbearbeitete Rohling von wenigstens einem zweiten Adapter (60, 78) im ersten, endgültig bearbeiteten Bereich (42,43,44, 47 ; 42,43,44, 47, 73) gehalten wird und der übrige Bereich (53 ; 74, 75) von einer Bearbeitungsmaschine resp. Fräsmaschine (10) in seine endgültige, der bestimmungsgemäßen Verwendung entsprechende Gesamtform (68, 82) gebracht wird.

2. Verfahren nach Anspruch 1, **dadurch gekennzeichnet, dass** es sich beim Rohling (30) um einen Rohling aus Metall oder einem Keramikwerkstoff in Form eines zylindrischen oder polyeder-förmigen, insbesondere bevorzugt quaderförmigen Blockes oder um einen Gussrohling handelt.

3. Verfahren nach Anspruch 2, **dadurch gekennzeichnet, dass** der Rohling (30) noch keinem Vorbearbeitungsschritt unterzogen wurde.

4. Verfahren nach einem der vorhergehenden Ansprüche, **dadurch gekennzeichnet, dass** der teilbearbeitete Rohling nach dem ersten Bearbeitungsschritt gereinigt und/oder vermessen wird, wobei er dazu insbesondere bevorzugt in einer definierten Halterung (48, 72) aus dem Bearbeitungsbereich der Bearbeitungsmaschine resp. Fräsmaschine entfernt, gereinigt, und/oder in einer Messstation (22) vermessen wird.

5. Verfahren nach Anspruch 4, **dadurch gekennzeichnet, dass** zur definierten Halterung beim ersten Bearbeitungsschritt in den übrigen Bereichen (53) definierte Spannflächen (45, 46) ausgearbeitet werden, über welche Transportmittel, insbesondere in Form von Greifern (48), und/oder Halterungsmitteln der Messstation (22) respektive einer Reinigungseinheit (21), insbesondere in Form von Greifern (56), den teilbearbeiteten Rohling in einer definierten Positionierung haltern können.

6. Verfahren nach einem der vorhergehenden Ansprüche, **dadurch gekennzeichnet, dass** es sich bei der endgültigen Gesamtform (68, 82) um eine Turbinenschaufel mit oder ohne Deckband handelt, insbesondere eine Turbinenschaufel mit einer Oberfläche im Bereich von N4 bis N5 bei Toleranzen von + - 0,002 mm, einer Länge von im Bereich von 10 bis 400 mm bei einem rotierenden Durchmesser von 50 bis 400 mm und einem Gewicht von 0,01 bis 40 kg.

7. Verfahren nach einem der vorhergehenden Ansprüche, **dadurch gekennzeichnet, dass** die endgültige Gesamtform (68, 82) nach dem zweiten Bearbeitungsschritt gereinigt und/oder vermessen und/oder verpackt wird.

8. Verfahren nach einem der vorhergehenden Ansprüche, **dadurch gekennzeichnet, dass** der erste Adapter (33,39) den Rohling (30) an einem ersten Ende greift, dass im ersten Bearbeitungsschritt das zweite Ende des Rohlings in seine endgültige, der bestimmungsgemäßen Verwendung entsprechende Teilform (42, 43, 44, 47) gebracht wird, dass der zweite Adapter (60) den teilbearbeiteten Rohling an der Teilform (42,43,44, 47) greift und im zweiten Bearbeitungsschritt das erste Ende (53) zur endgültigen Gesamtform (68) verarbeitet wird.

9. Verfahren nach den Ansprüchen 5, 6, und 8, **dadurch gekennzeichnet, dass** es sich bei der Teilform (42,43,44, 47) um den Fußbereich der Turbinenschaufel handelt.

10. Verfahren nach Anspruch 9, **dadurch gekennzeichnet, dass** im ersten Bearbeitungsschritt auf zwei gegenüberliegenden Seiten des Rohlings jeweils zwei definierte Spannflächen in Form von Sacklöchem (45, 46) gefräst werden, wobei ein oberes Paar (45) für das Greifen mit einem Greifer (48) zum Entfernen und Wiedereinbringen des teilbearbeiteten Rohlings aus dem Bearbeitungsbereich der Bearbeitungsmaschine resp. Fräsmaschine (10) verwendet wird, und ein unteres Paar (46) für das definierte Fixieren des teilbearbeiteten Rohlings auf der Messstation (22) verwendet wird.

11. Verfahren nach Anspruch 10, **dadurch gekennzeichnet, dass** beim zweiten Bearbeitungsschritt ein Zentrierloch auf der dem Fuß abgewandten Seite gefräst wird, und wenigstens während einiger Materialbearbeitungsschritte während des zweiten Bearbeitungsschrittes in dieses Zentrierloch ein verfahr- und/oder klappbarer Reitstock zur Halterung eingefahren wird.

12. Verfahren nach einem der Ansprüche 1 bis 7, **dadurch gekennzeichnet, dass** der erste Adapter (72) den Rohling (30) an einem ersten Ende greift und ggf. das zweite Ende über einen verfahr- und/oder klappbaren Reitstock und eine Zentrierbohrung fixiert wird, dass im ersten Bearbeitungsschritt der mittlere Bereich und ggf. einer der Endbereiche des Rohlings in seine endgültige, der bestimmungsgemäßen Verwendung entsprechende Teilform (42,43,44, 47, 73) gebracht wird, dass der zweite Adapter (78) den teilbearbeiteten Rohling an der mittleren Teilform (42,43,44, 47, 73) greift und der eine respektive ggf. die beiden Endbereiche zur endgültigen Gesamtform (82) verarbeitet werden.

13. Verfahren nach den Ansprüchen 6 und 10, **dadurch gekennzeichnet, dass** es sich bei der Teilform (42,43,44, 47, 73) um eine Turbinenschaufel unter Belassung von unbearbeiteten Überständen (74, 75) am Kopf- und/oder am Fußteil handelt, wobei insbesondere bevorzugt bereits beim ersten Bearbeitungsschritt Einschnitte (76, 77) zwischen den Überständen (76, 77) und der Turbinenschaufel (42,43,44, 47, 73) vorgesehen werden.

14. Verfahren nach Anspruch 13, **dadurch gekennzeichnet, dass** der zweite Adapter (78) die teilbearbeitete Turbinenschaufel mit zwei Spannbacken (79) greift, wobei die Achse der teilbearbeiteten Turbinenschaufel im wesentlichen senkrecht zur Befestigungsachse des zweiten Adapters (78) in der Bearbeitungsmaschine resp. Fräsmaschine (10) zu liegen kommt.

15. Verfahren nach einem der vorhergehenden Ansprüche, **dadurch gekennzeichnet, dass** wenigstens zwei Bearbeitungsmaschinen resp. Fräsmaschinen (10) in einer Zelle gleichzeitig zur Anwendung kommen, wobei die Rohlinge (30), die teilbearbeiteten Rohlinge sowie die endgültigen Gesamtformen (68, 82) mit einem Handlingsystem (16) über ein Handlingportal (18) über eine zentrale Steuerung jeweils verfügbaren Bearbeitungsmaschinen resp. Fräsmaschinen (10) zugeführt und in diesen einem ersten respektive zweiten Bearbeitungsschritt unterzogen werden.

16. Verfahren nach Anspruch 15, **dadurch gekennzeichnet, dass** in der Zelle gleichzeitig wenigstens eine Messeinheit (22) und/oder wenigstens eine Reinigungseinheit (21) und/oder wenigstens ein Werkstück-Pufferplatz und/oder ein Beladeband (11) und/oder ein Adaptermagazin (12) und/oder eine Ausschleusstation (13) und/oder eine Wasch- und Konservierungsanlage (14) und/oder eine Materialcodelesestation (15) und/oder eine Beschriftungseinheit (20) am Handlingportal angeschlossen sind, und dass die zentrale Steuerung die Teile auch diesen Einheiten den jeweiligen Bedingungen angepasst zuweist.

17. Verfahren nach einem der Ansprüche 1 bis 16, **dadurch gekennzeichnet, dass** die Bearbeitungsmaschinen wie beispielsweise die Fräsmaschinen (10) sowie ggf. eine Messeinheit (22) und/oder wenigstens eine Reinigungseinheit (21) und/oder wenigstens ein Werkstück-Pufferplatz und/oder ein Beladeband (11) und/oder ein Adaptermagazin (12) und/oder eine Ausschleusstation (13) und/oder eine Wasch-und Konservierungsanlage (14) und/oder eine Materialcodelesestation (15) und/oder eine Beschriftungseinheit (20) über ein einziges, linear oder zirkulär ausgebildetes Handlingportal (18) insbesondere in Form eines Bandes oder einer Schiene, auf welchem ein Handlingsystem (16) mit wenigstens einem Greifer verfahrbar gelagert wird, mit den Rohlingen (30), den teilbearbeiteten Rohlingen sowie den endgültigen Gesamtformen (68, 82) bedient werden.

## Claims

1. Method of machining a blank (30) from all directions using at least one machine tool, such as a milling machine (10) for example, in which the blank (30), in a first machining step, is held by at least one first adapter (33, 39, 72) and a first region (42, 43, 44, 47; 42, 43, 44, 47, 73) is given its final partial shape corresponding to the intended use by a machine tool or milling machine (10), **characterized in that**, in a second machining step, the partly machined blank is held by at least one second adapter (60, 78) in the first, finally machined region (42, 43, 44, 47; 42, 43, 44, 47, 73), and the remaining region (53; 74, 75) is given its final overall shape (68, 82) corresponding to the intended use by a machine tool or milling machine (10).

2. Method according to claim 1, **characterized in that** the blank (30) is a blank made of metal or a ceramic material in the form of a cylindrical or polyhedral, in particular preferably parallelepiped-shaped, block or is a cast blank.

3. Method according to claim 2, **characterized in that** the blank (30) has not been subjected to any pre-machining step.

4. Method according to one of the preceding claims, **characterized in that** the partly machined blank is cleaned and/or measured after the first machining step, for which purpose it is in particular preferably removed in a defined mounting (48, 72) from the machining region of the machine tool or milling machine and cleaned and/or measured in a measuring station (22).

5. Method according to claim 4, **characterized in that**, for the defined mounting during the first machining step, defined gripping surfaces (45, 46) are prepared in the remaining regions (53), via which gripping surfaces (45, 46) transport means, in particular in the form of grippers (48), and/or mounting means of the measuring station (22) or of a cleaning unit (21), respectively, in particular in the form of grippers (56), can mount the partly machined blank in a defined position.

6. Method according to one of the preceding claims, **characterized in that** the final overall shape (68, 82) involves a turbine blade with or without shroud band, in particular a turbine blade having a surface within the range of N4 to N5 at tolerances of +/- 0.002 mm, a length within a range of 10 to 400 mm with a rotating diameter of 50 to 400 mm and a weight of 0.01 to 40 kg.

7. Method according to one of the preceding claims, **characterized in that** the final overall shape (68, 82) is cleaned and/or measured and/or packed after the second machining step.

8. Method according to one of the preceding claims, **characterized in that** the first adapter (33, 39) grips the blank (30) at a first end, **in that**, in the first machining step, the second end of the blank is given its final partial shape (42, 43, 44, 47) corresponding to the intended use, **in that** the second adapter (60) grips the partly machined blank at the partial shape (42, 43, 44, 47) and, in the second machining step, the first end (53) is processed into the final overall shape (68).

9. Method according to claims 5, 6 and 8,
**characterized in that** the partial shape (42, 43, 44, 47) involves the root region of the turbine blade.

10. Method according to claim 9, **characterized in that**, in the first machining step, two defined gripping surfaces in the form of blind holes (45, 46) are milled on each of two opposite sides of the blank, a top pair (45) being used for the gripping with a gripper (48) for removing the partly machined blank from the machining region of the machine tool or milling machine (10) and for reinserting said partly machined blank, and a bottom pair (46) being used for the defined fixing of the partly machined blank on the measuring station (22).

11. Method according to claim 10, **characterized in that**, in the second machining step, a center hole is milled on the side remote from the root, and a traversable and/or pivotally mounted tailstock for the mounting is moved into this center hole at least during some stock removal steps during the second machining step.

12. Method according to one of claims 1 to 7, **characterized in that** the first adapter (72) grips the blank at a first end, and, if appropriate, the second end is fixed via a traversable and/or pivotally mounted tailstock and a center hole, **in that**, in the first machining step, the center region and, if appropriate, one of the end regions of the blank is given its final partial shape (42, 43, 44, 47, 73) corresponding to the intended use, **in that** the second adapter (78) grips the partly machined blank at the center partial shape (42, 43, 44, 47, 73) and the one end region or, if appropriate, the two end regions are processed into the final overall shape (82).

13. Method according to claims 6 and 10, **characterized in that** the partial shape (42, 43, 44, 47, 73) involves a turbine blade, with unmachined projecting portions (74, 75) being left at the tip part and/or at the root part, recesses (76, 77) being provided between the projecting portions (74, 75) and the turbine blade (42, 43, 44, 47, 73) in particular preferably during the first machining step.

14. Method according to claim 13, **characterized in that** the second adapter (78) grips the partly machined turbine blade by means of two gripping jaws (79), the axis of the partly machined turbine blade coming to lie essentially perpendicularly to the fastening axis of the second adapter (78) in the machine tool or milling machine (10).

15. Method according to one of the preceding claims, **characterized in that** at least two machine tools or milling machines (10) are used simultaneously in a cell, the blanks (30), the partly machined blanks and the final overall shapes (68, 82) being fed by means of a handling system (16) via a handling portal (18) and via a central control to machine tools or milling machines (10) available in each case and being subjected to a first or second machining step, respectively, in said machine tools or milling machines (10).

16. Method according to claim 15, **characterized in that** at least one measuring unit (22) and/or at least one cleaning unit (21) and/or at least one workpiece buffer location and/or a loading belt (11) and/or an adapter magazine (12) and/or a discharge station (13) and/or a washing and preserving unit (14) and/or a material-code-reading station (15) and/or an inscription unit (20) are connected to the handling portal at the same time in the cell, and **in that** the central control also assigns the parts to these units in a manner adapted to the respective conditions.

17. Method according to one of claims 1 to 16, **characterized in that** the machine tools, such as the milling machines (10) for example, and, if appropriate, a measuring unit (22) and/or at least one cleaning unit (21) and/or at least one workpiece buffer location and/or a loading belt (11) and/or an adapter magazine (12) and/or a discharge station (13) and/or a washing and preserving unit (14) and/or a material-code-reading station (15) and/or an inscription station (20) are served with the blanks (30), the partly machined blanks and the final overall shapes (68, 82) via a single handling portal (18) of linear or circular design, in particular in the form of a belt or a rail on which a handling system (16) having at least one gripper is mounted in a traversable manner.

## Revendications

1. Procédé pour usiner une ébauche(30) sur toutes ses faces avec au moins une machine d'usinage comme par exemple une fraiseuse (10), selon lequel, au cours d'une première étape d'usinage, l'ébauche (30) est maintenue par au moins un premier adaptateur (33, 39, 72) et une première région (42, 43, 44, 47 ; 42, 43, 44, 47, 73) est, par une machine d'usinage ou fraiseuse (10), amenée sous sa forme partielle définitive correspondant à l'utilisation prévue,
**caractérisé en ce que**, au cours d'une deuxième étape d'usinage, l'ébauche partiellement usinée est maintenue par au moins un deuxième adaptateur (60, 78) dans la première région définitivement usinée (42, 43, 44, 47 ; 42, 43, 44, 47, 73) et la région restante (53 ; 74, 75) est, par une machine d'usinage ou fraiseuse (10), amenée sous sa forme totale définitive (68, 82) correspondant à l'utilisation prévue.

2. Procédé selon la revendication 1, **caractérisé en ce que** l'ébauche (30) est une ébauche en métal ou en un matériau céramique sous la forme d'un bloc cylindrique ou polyédrique, notamment et de préférence parallélépipédique, ou une ébauche venue de fonderie.

3. Procédé selon la revendication 2, **caractérisé en ce que** l'ébauche (30) n'a été soumise à aucune étape de préusinage.

4. Procédé selon l'une quelconque des revendications précédentes, **caractérisé en ce que** l'ébauche partiellement usinée est nettoyée et/ou mesurée après la première étape d'usinage, sachant qu'à cet effet, notamment et de préférence avec un maintien défini (48, 72), elle est retirée de la zone d'usinage de la machine d'usinage ou fraiseuse, nettoyée et/ou mesurée dans un poste de mesurage (22).

5. Procédé selon la revendication 4, **caractérisé en ce que**, afin d'obtenir le maintien défini, des surfaces de serrage définies (45, 46) sont ménagées lors de la première étape d'usinage dans les régions restantes (53), surfaces à l'aide desquelles des moyens de transport, notamment sous la forme de preneurs (48), et/ou des moyens de maintien du poste de mesurage (22) ou respectivement d'une unité de nettoyage (21), notamment sous la forme de preneurs (56), peuvent maintenir dans un positionnement défini l'ébauche partiellement usinée.

6. Procédé selon l'une quelconque des revendications précédentes, **caractérisé en ce que** la forme totale définitive (68, 82) est une aube de turbine avec ou sans anneau de renforcement, notamment une aube de turbine avec une surface dans la plage de N4 à N5 avec des tolérances de ± 0,002 mm et une longueur dans la plage de 10 à 400 mm, pour un diamètre rotatif de 50 à 400 mm et un poids de 0,01 à 40 kg.

7. Procédé selon l'une quelconque des revendications précédentes, **caractérisé en ce que** la forme totale définitive (68, 82) est, après la deuxième étape d'usinage, nettoyée et/ou mesurée et/ou emballée.

8. Procédé selon l'une quelconque des revendications précédentes, **caractérisé en ce que** le premier adaptateur (33, 39) saisit l'ébauche (30) à une première extrémité, **en ce que**, au cours de la première étape d'usinage, la deuxième extrémité de l'ébauche est amenée sous sa forme partielle définitive (42, 43, 44, 47) correspondant à l'utilisation prévue, et **en ce que** le deuxième adaptateur (60) saisit l'ébauche partiellement usinée au niveau de la forme partielle (42, 43, 44, 47) et, au cours de la deuxième étape d'usinage, la première extrémité (53) est amenée sous sa forme totale définitive (68).

9. Procédé selon les revendications 5, 6 et 8, **caractérisé en ce que** la forme partielle (42, 43, 44, 47) est la région du talon de l'aube de turbine.

10. Procédé selon la revendication 9, **caractérisé en ce que**, au cours de la première étape d'usinage, deux surfaces de serrage définies sous la forme de trous borgnes (45, 46) sont respectivement fraisées sur deux côtés opposés de l'ébauche, sachant qu'une paire supérieure (45) est utilisée pour saisir avec un preneur (48) l'ébauche partiellement usinée en vue de la retirer de la zone d'usinage de la machine d'usinage ou fraiseuse (10) et de l'y réintroduire, et qu'une paire inférieure (46) est utilisée pour la fixation en position définie de l'ébauche partiellement usinée sur le poste de mesurage (22).

11. Procédé selon la revendication 10, **caractérisé en ce que**, lors de la deuxième étape d'usinage, un trou de centrage est fraisé sur le côté opposé au talon, et une contre-poupée mobile en translation et/ou pivotante est introduite aux fins de maintien dans ce trou de centrage au moins pendant quelques opérations d'enlèvement de matière au cours de la deuxième étape d'usinage.

12. Procédé selon l'une quelconque des revendications 1 à 7, **caractérisé en ce que** le premier adaptateur (72) saisit l'ébauche (30) à une première extrémité et la deuxième extrémité est éventuellement immobilisée au moyen d'une contre-poupée mobile en translation et/ou pivotante et d'un perçage de centrage, **en ce que**, au cours de la première étape d'usinage, la région centrale et éventuellement une des régions terminales de l'ébauche sont amenées sous leur forme partielle définitive (42, 43, 44, 47, 73) correspondant à l'utilisation prévue, et **en ce que** le deuxième adaptateur (78) saisit l'ébauche partiellement usinée au niveau de la forme partielle centrale (42, 43, 44, 47, 73) et l'autre région terminale ou respectivement les deux régions terminales sont traitées pour obtenir la forme totale définitive (82).

13. Procédé selon les revendications 6 et 10, **caractérisé en ce que** la forme partielle (42, 43, 44, 47, 73) est une aube de turbine en laissant des portions dépassantes non usinées (74, 75) sur la partie de tête et/ou sur la partie de talon, sachant que des entailles (76, 77) sont notamment et de préférence prévues dès la première étape d'usinage entre les portions dépassantes (74, 75) et l'aube de turbine (42, 43, 44, 47, 73).

14. Procédé selon la revendication 13, **caractérisé en ce que** le deuxième adaptateur (78) saisit l'aube de turbine partiellement usinée par deux mors de serrage (79), sachant que l'axe de l'aube de turbine partiellement usinée vient se placer essentiellement perpendiculairement à l'axe de fixation du deuxième adaptateur (78) dans la machine d'usinage ou la fraiseuse (10).

15. Procédé selon l'une quelconque des revendications précédentes, **caractérisé en ce qu'**on utilise simultanément au moins deux machines d'usinage ou fraiseuses (10) dans une cellule, sachant que les ébauches (30), les ébauches partiellement usinées ainsi que les formes totales définitives (68, 82) sont apportées par un système de manutention (16), via un portique de manutention (18) et une commande centralisée, à des machines d'usinage ou fraiseuses (10) chaque fois disponibles et sont soumises dans celles-ci respectivement à une première ou une deuxième étape d'usinage.

16. Procédé selon la revendication 15, **caractérisé en ce que**, dans la cellule, au moins une unité de mesurage (22) et/ou au moins une unité de nettoyage (21) et/ou au moins un emplacement de stockage intermédiaire de pièces et/ou une bande transporteuse de chargement (11) et/ou un magasin d'adaptateurs (12) et/ou un poste d'évacuation (13) et/ou un dispositif (14) de lavage et de traitement protecteur et/ou un poste (15) de lecture de code matière et/ou une unité de marquage (20) sont simultanément raccordés au portique de manutention, et **en ce que** la commande centralisée affecte également les pièces à ces unités d'une manière adaptée aux conditions respectives.

17. Procédé selon l'une quelconque des revendications 1 à 16, **caractérisé en ce que** les machines d'usinage comme par exemple les fraiseuses (10) ainsi qu'éventuellement une unité de mesurage (22) et/ou au moins une unité de nettoyage (21) et/ou au moins un emplacement de stockage intermédiaire de pièces et/ou une bande transporteuse de chargement (11) et/ou un magasin d'adaptateurs (12) et/ou un poste d'évacuation (13) et/ou un dispositif (14) de lavage et de traitement protecteur et/ou un poste (15) de lecture de code matière et/ou une unité de marquage (20) sont alimentés en ébauches (30), en ébauches partiellement usinées ainsi qu'en formes totales définitives (68, 82) au moyen d'un unique portique de manutention (18) de conception linéaire ou circulaire, notamment sous la forme d'une bande ou d'un rail, sur lequel est monté à déplacement un système de manutention (16) pourvu d'au moins un preneur.
